# EUROPEAN PATENT SPECIFICATION

(11) **EP 4 064 020 B1**
(45) Date of publication and mention of the grant of the patent: **13.12.2023**
(21) Application number: 22161851.5
(22) Date of filing: 14.03.2022
(51) Int. Cl.: G06F 3/04883, G06F 3/0354, G06F 3/023, G06F 3/0482, G06F 3/04842, G06F 3/04845, G06V 30/226, G06V 30/32, G06F 40/58, G06F 40/171, G06F 40/274, G06F 9/451

(54) **DISPLAY SYSTEM, DISPLAY METHOD, AND CARRIER MEANS**
ANZEIGESYSTEM, ANZEIGEVERFAHREN UND TRÄGERMITTEL
SYSTÈME D'AFFICHAGE, PROCÉDÉ D'AFFICHAGE ET SUPPORT

(30) Priority: 23.03.2021 JP 2021048598
(43) Date of publication of application: 28.09.2022
(73) Proprietor: Ricoh Company, Ltd., Tokyo 143-8555 (JP)
(72) Inventor: TSUJI, Shigekazu, Tokyo, 143-8555 (JP)
(74) Representative: SSM Sandmair

(56) References cited:
- US-A- 6 154 758
- US-A1- 2005 102 620
- US-A1- 2008 033 728
- US-A1- 2015 146 986
- US-A1- 2015 169 551
- US-A1- 2020 327 307

## Description

### BACKGROUND

### Technical Field

Embodiments of the present disclosure relate to a display system, a display method, and carrier means.

### Related Art

There are display apparatuses that convert hand drafted data to a character string (character codes) and displays the character string on a screen by using a handwriting recognition technology. A display apparatus having a relatively large touch panel is used in a conference room or the like, and is shared by a plurality of users as an electronic whiteboard or the like. In some cases, a display apparatus is used as a written communication tool.

In addition, there is a technology of converting hand drafted data into a character string of another language using a handwriting recognition technology. For example, Japanese Patent No. 3933449 discloses an apparatus that displays second language information on an image display unit, based on relative positions of a user of a first pen and a user of a second pen, such that the second language information is positionally correct when viewed from the user of the second pen.

In communication between speakers of different languages, the speaker may need to check whether the other speaker understands the conversion result provided by the display apparatus. In this case, there are no conventional technology of selecting a character string from a plurality of character string candidates, displaying a character string converted into different language (target language) from the selected character string, and reconverting the converted character string.

### SUMMARY

The scope of the invention is defined by the independent claims 1, 8 and 9. Further aspects of the invention are outlined in the dependent claims.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIGS. 1A to 1F are diagrams illustrating an example of conversion of a character string displayed by a display apparatus according to one embodiment;
FIGS. 2A to 2C are diagrams illustrating examples of a general arrangement of the display apparatus according to embodiments;
FIG. 3 is a block diagram illustrating an example of a hardware configuration of the display apparatus according to embodiments;
FIG. 4 is a block diagram illustrating an example of a functional configuration of the display apparatus according to Embodiment 1;
FIG. 5 is a diagram illustrating an example of an operation guide and selectable character string candidates provided by the display apparatus according to Embodiment 1;
FIG. 6 is a diagram illustrating a display direction of a character string;
FIG. 7 is a diagram schematically illustrating correspondence between the direction of handwriting by a user and the display direction;
FIGS. 8A to 8C are diagrams illustrating an example of a method of receiving angle information;
FIG. 9 is a diagram illustrating an example of a method for the display apparatus to associate the display direction with a target language based on a user operation;
FIG. 10 is an example of a handwritten object displayed by handwriting by the user;
FIG. 11 illustrates five character string candidates displayed as a result of character recognition by a character recognition unit according to Embodiment 1;
FIG. 12 illustrates the converted character string converted into the target language, which is displayed in response to selection of one of the character string candidates illustrated in FIG. 11;
FIGS. 13A to 13C are diagrams illustrating an example of reconversion of the converted character string illustrated in FIG. 12;
FIG. 14 is a diagram illustrating an example of five character string candidates displayed in response to selection of the converted character string in FIG. 13A, 13B, or 13C;
FIG. 15 illustrates an example of a converted character string in the target language, displayed in response to selection of one of the character string candidates with a pen by the user;
FIG. 16 illustrates an example of character string candidates displayed when the converted character string is selected with another pen in FIG. 15;
FIG. 17 illustrates an example of conversion when a character string candidate is selected by yet another pen in FIG. 11;
FIG. 18 is an example of a flowchart illustrating a process in which a display apparatus converts a selected character string candidate into a target language associated with a pen;
FIGS. 19A and 19B illustrate rotation of a converted character string;
FIGS. 20A and 20B illustrate examples of the converted character string and the operation guide displayed in the display direction associated with the pen;
FIGS. 21A and 21B illustrate examples of the operation guide displayed when the display direction associated with pen identifier (ID) is 90 degrees and 270 degrees;
FIG. 22 is a diagram illustrating a configuration of a display system according one embodiment;
FIG. 23 is a diagram illustrating a configuration of a display system according to another embodiment;
FIG. 24 is a diagram illustrating a configuration of a display system according to another embodiment; and
FIG. 25 is a diagram illustrating a configuration of a display system according to another embodiment.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity.

Referring now to the drawings, embodiments of the present disclosure are described below. As used herein, the singular forms "a," "an," and "the" are intended to include the plural forms as well, unless the context clearly indicates otherwise.

A description is given below of a display apparatus and a display method according to embodiments of the present disclosure, with reference to the attached drawings.

### Embodiment 1

A display apparatus may be used in a workplace or a site where different language speakers are mixed. In such a situation, when a first person who speaks a certain language (first language) wants to convey, by handwriting, information to a second person who speaks a different language (second language), the communication is facilitated by converting and displaying the character string displayed on the display into the second language understood by the second person.

When different language speakers communicate with each other on a display apparatus, displaying a plurality of character string candidates to be converted into another language helps the user to select a character string suitable for the communication.

In addition, in communication between different language speakers on a display apparatus, there may be a case where the second language speaker does not understand a character string converted from handwriting by the first language speaker because the conversion is improper. In such a case, the first language speaker desires to select another character string candidate. Conventionally, the speaker again performs handwriting to select a different conversion result.

### Overview of Operation of Display Apparatus

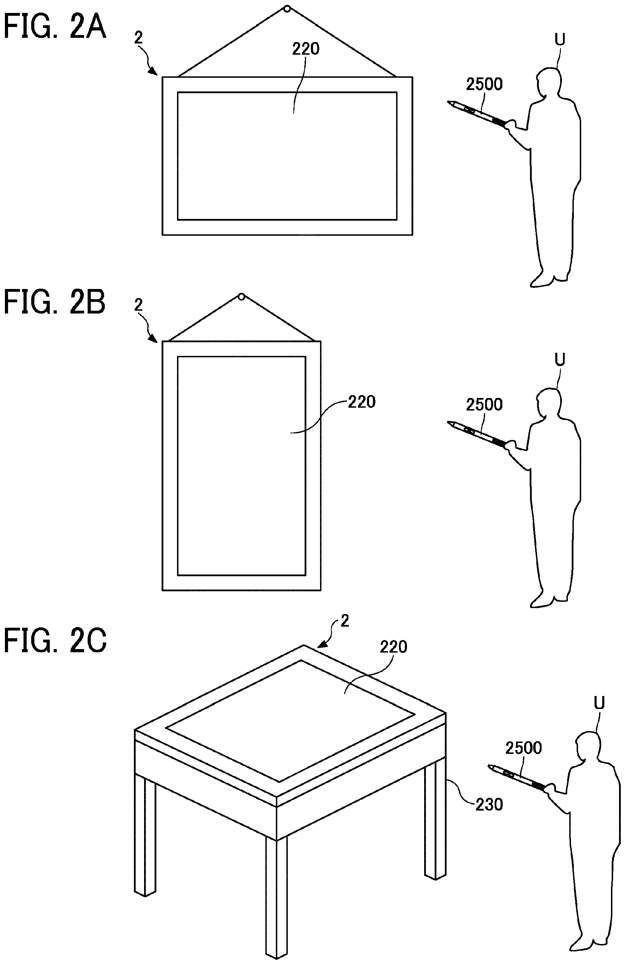

The display apparatus (e.g., a display apparatus 2 illustrated in FIG. 2A, 2B, or 2C) according to the present embodiment displays a plurality of character string candidates for conversion into another language. Further, the display apparatus again converts a character string once converted into another language into another character string in another language.

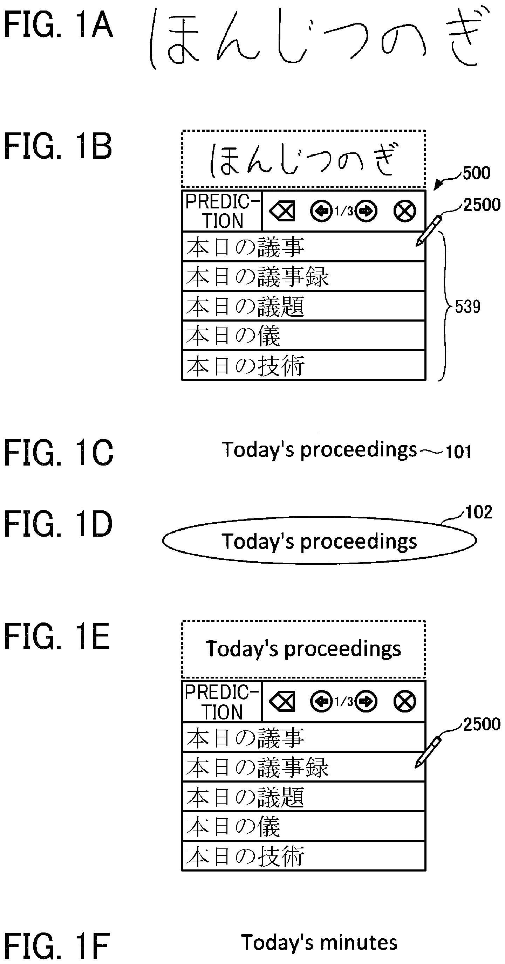

FIGS. 1A to 1F illustrate an example of conversion of a character string displayed by the display apparatus according to the present embodiment. Two users communicate with each other by writing or conversation via the display apparatus. For example, the first person is a Japanese speaker, and the second person is an English speaker. The Japanese speaker uses a pen 2500 that is set for Japanese writing (display language to be described later is Japanese) and set with information for converting Japanese into English (target language to be described later is English).

As illustrated in FIG. 1A, the user has handwritten Japanese Katakana characters " 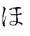 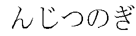 " with the pen 2500." The display apparatus displays an operation guide 500 (FIG. 1B) in response to hand drafted input.

When the hand drafted input is finished, the display apparatus recognizes the handwriting in Japanese because the pen 2500 is dedicated for Japanese writing. In addition, the display apparatus performs kana-kanji conversion or predictive conversion of the Katakana and displays character string candidates 539 in the operation guide 500.

The display apparatus displays a plurality of character string candidates to be converted into another language, thereby allowing the user to select a character string candidate considered to be appropriate for the communication.

In FIG. 1B, since the pen 2500 is dedicated for Japanese writing, for the character string " 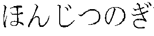 " (pronounced as "honjitsu no gi"), the operation guide 500 presents five Japanese character string candidates 539, " 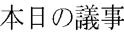 " (pronounced as "honjitsu no giji" and meaning today's proceeding)," 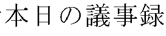 " (pronounced as "honjitsu no gijiroku" and meaning today's minutes), " 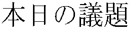 " (pronounced as "honjitsu no gidai" and meaning today's subjects), " 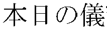 " (pronounced as "honjitsu no gi" and meaning today's ceremony), and " 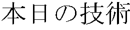 " (pronounced as "honjitsu no gijutsu" and meaning today's technology). The user selects one (" 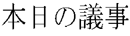 ") of the Japanese character string candidates 539 with the pen 2500. The display apparatus converts " 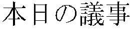 " into English, which is a target language (destination language of conversion) set in the pen 2500.

In FIG. 1C, the selected " 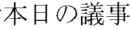 " is converted into a converted character string 101 "today's proceedings." At this time, the display apparatus 2 automatically closes the operation guide 500. Then, the user (Japanese speaker) may feel the conversation does not proceed. In that case, the user tries to again convert the handwriting.

In FIG. 1D, the user handwrites a frame line 102 surrounding the converted character string 101 "today's proceedings" with the pen 2500. Thus, the display apparatus selects the object "today's proceedings" based on the user operation (e.g., hand drafted input). Since the pen 2500 is dedicated for Japanese writing, the display apparatus again displays, in the operation guide 500, the Japanese character string candidate 539 that has been displayed before the converted character string 101 is displayed.

FIG. 1E illustrates the operation guide 500 displayed in response to selection of the converted character string 101 by the frame line 102 illustrated in FIG. 1D.

As described above, the display apparatus again displays the plurality of character string candidates to be converted into another language. This configuration enables the user to select another character string candidate with which communication is likely to be successful, without again inputting the handwriting.

The user selects " 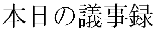 " from the character string candidates 539 with the pen 2500 in FIG. 1E. The display apparatus converts " 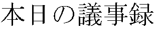 " into English, which is the target language set for the pen 2500.

In FIG. 1F, " 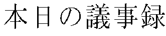 " is converted into a converted character string 101 "today's minutes." The display apparatus may again display the operation guide 500 in response to user' selection of the converted character string 101. Note that, although Japanese " 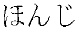 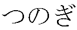 " is handwritten in this example, the language of hand draft input is not limited thereto. For example, the display apparatus 2 receives handwritten English "today's proceedings" and displays character string candidates such as " 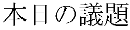 ."

As described above, the display apparatus 2 according to the present embodiment enables the user to select, from a plurality of candidates, a character string to be converted into the target language, thereby facilitating smooth communication. Further, in response to the user's selecting the converted character string 101, the display apparatus again displays the plurality of candidates of the character string to be converted even after one of the candidates has been converted into the target language.

Therefore, the display apparatus 2 receives the selection of another one from the character string candidates and converts the selected character string into the target language, without user's repeatedly inputting the handwriting. Further, the display apparatus converts the selected character string candidate into the target language set for the pen.

### Terms

"Input device" may be any means with which a user inputs handwriting (hand drafting) by designating coordinates on a touch panel. Examples thereof include a pen, a human finger, a human hand, and a bar-shaped member.

A series of user operations including engaging a writing mode, recording movement of an input device or portion of a user, and then disengaging the writing mode is referred to as a stroke. The engaging of the writing mode may include, if desired, pressing an input device against a display or screen, and disengaging the writing mode may include releasing the input device from the display or screen. Alternatively, a stroke includes tracking movement of the portion of the user without contacting a display or screen. In this case, the writing mode may be engaged or turned on by a gesture of a user, pressing a button by a hand or a foot of the user, or otherwise turning on the writing mode, for example using a pointing device such as a mouse. The disengaging of the writing mode can be accomplished by the same or different gesture used to engage the writing mode, releasing the button, or otherwise turning off the writing mode, for example using the pointing device or mouse. "Stroke data" is data based on a trajectory of coordinates of a stroke input with the input device. Such stroke data may be interpolated appropriately. "Hand drafted data" is data having one or more stroke data. "Hand drafted data" is data used for displaying (reproducing) a display screen including objects handwritten or hand-drafted by the user. "Hand drafted input" relates to a user input such as handwriting, drawing, and other forms of input. The hand drafted input may be performed via touch interface, with a tactile object such as a pen or stylus or with the user's body. The hand drafted input may also be performed via other types of input, such as gesture-based input, hand motion tracking input or other touch-free input by a user.

An "object" refers to an item displayed on a screen and includes an object drawn by a stroke.

The term "object" in this specification also represents an object of display.

A character string obtained by character recognition and conversion from hand drafted data may include, in addition to text data, data based on a user operation, such as a stamp including a given character or a mark such as "complete," a graphic such as a circle or a star, or a line.

"Confirmed data" refers to one or more character codes (font) converted from hand drafted data by character recognition and selected by the user, or hand drafted data that is determined not to be converted into one or more character codes (font).

An "operation command" refers to a command prepared for instructing a handwriting (hand-drawing) input device to execute a specific process. In the present embodiment, a description is given of an example in which the display apparatus 2 receives, from the user, an instruction to associate the display direction with the converted character string 101. Operation command examples further include commands for editing, modifying, inputting, or outputting a character string.

The character string includes one or more characters handled by a computer. The character string actually is one or more character codes. Characters include numbers, alphabets, symbols, and the like. The character string is also referred to as text data.

Conversion refers to an act of changing or being changed. Converting the language of a character string may be referred to as translation.

The target language is another language into which a character string candidate of a certain language is converted (translated). The display language is a language in which hand drafted data (stroke data) is recognized and is also a language in which character-recognized character string candidates are displayed.

### Configuration of Apparatus

Referring to FIGS. 2A to 2C, a description is given of a general arrangement of the display apparatus 2 according to the present embodiment. FIGS. 2A to 2C are diagrams illustrating examples of general arrangement of the display apparatus 2. FIG. 2A illustrates, as an example of the display apparatus 2, an electronic whiteboard having a landscape-oriented rectangular shape and being hung on a wall.

As illustrated in FIG. 2A, the display apparatus 2 includes a display 220 (a screen). A user U handwrites (also referred to as "inputs" or "draws"), for example, a character on the display 220 using a pen 2500.

FIG. 2B illustrates, as another example of the display apparatus 2, an electronic whiteboard having a portrait-oriented rectangular shape and being hung on a wall.

FIG. 2C illustrates, as another example, the display apparatus 2 placed on the top of a desk 230. The display apparatus 2 has a thickness of about 1 centimeter. It is not necessary to adjust the height of the desk 230, which is a general-purpose desk, when the display apparatus 2 is placed on the top of the desk 230. Further, the display apparatus 2 is portable and easily moved by the user.

Examples of an input method of coordinates by the pen 2500 include an electromagnetic induction method and an active electrostatic coupling method. In other example, the pen 2500 further has functions such as pen pressure detection, inclination detection, a hover function (displaying a cursor before the pen is brought into contact), or the like.

### Hardware Configuration

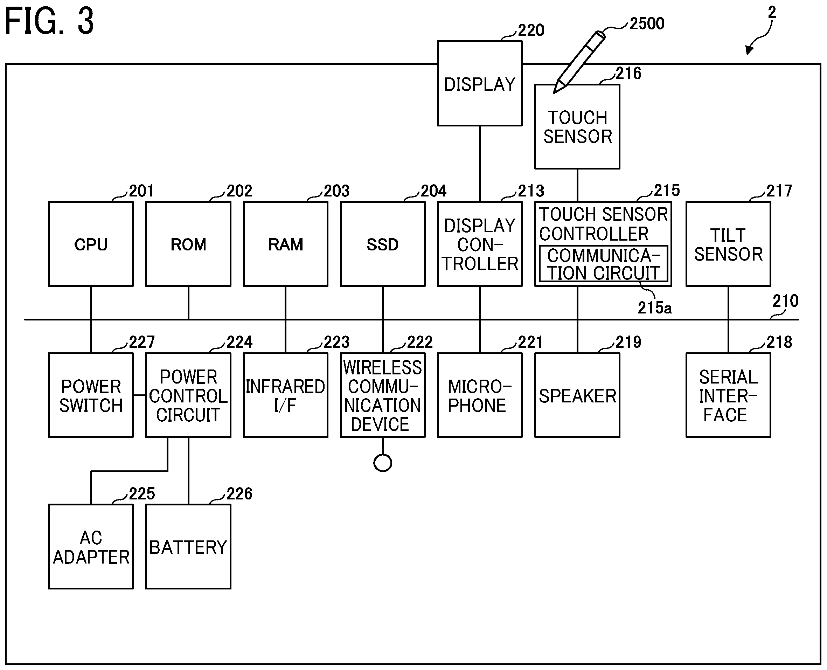

A description is given of a hardware configuration of the display apparatus 2 according to the present embodiment, with reference to FIG. 3. The display apparatus 2 has a configuration of an information processing apparatus or a computer as illustrated in FIG. 3. FIG. 3 is a block diagram illustrating an example of the hardware configuration of the display apparatus 2. As illustrated in FIG. 3, the display apparatus 2 includes a central processing unit (CPU) 201, a read only memory (ROM) 202, a random access memory (RAM) 203, and a solid state drive (SSD) 204.

The CPU 201 controls entire operation of the display apparatus 2. The ROM 202 stores a control program such as an initial program loader (IPL) to boot the CPU 201. The RAM 203 is used as a work area for the CPU 201.

The SSD 204 stores various data such as an operating system (OS) and a control program for the display apparatus 2. This program may be an application program that runs on an information processing apparatus equipped with a general-purpose operating system (OS) such as WINDOWS, MAC OS, ANDROID, and IOS.

The display apparatus 2 further includes a display controller 213, a touch sensor controller 215, a touch sensor 216, a display 220, a power switch 227, a tilt sensor 217, a serial interface 218, a speaker 219, a microphone 221, a wireless communication device 222, an infrared interface (I/F) 223, a power control circuit 224, an AC adapter 225, and a battery 226.

The display controller 213 controls display of an image for output to the display 220, etc. The touch sensor 216 detects that the pen 2500, a user's hand or the like is brought into contact with the display 220. The pen or the user's hand is an example of input device. The touch sensor 216 also receives a pen identifier (ID).

The touch sensor controller 215 controls processing of the touch sensor 216. The touch sensor 216 performs coordinate input and coordinate detection. More specifically, in a case where the touch sensor 216 is optical type, for inputting and detecting coordinates, the display 220 is provided with two light receiving and emitting devices disposed on both upper side ends of the display 220, and a reflector frame surrounding the sides of the display 220. The light receiving and emitting devices emit a plurality of infrared rays in parallel to a surface of the display 220. Light-receiving elements receive lights passing in the direction that is the same as an optical path of the emitted infrared rays, which are reflected by the reflector frame. The touch sensor 216 outputs position information of the infrared ray that is blocked by an object after being emitted from the two light receiving and emitting devices, to the touch sensor controller 215. Based on the position information of the infrared ray, the touch sensor controller 215 detects a specific coordinate that is touched by the object. The touch sensor controller 215 further includes a communication circuit 215a for wireless communication with the pen 2500. For example, when communication is performed in compliance with a standard such as BLUETOOTH (registered trademark), a commercially available pen can be used.

When one or more pens 2500 are registered in the communication circuit 215a in advance, the display apparatus 2 communicates with the pen 2500 without connection setting between the pen 2500 and the display apparatus 2, performed by the user.

The power switch 227 turns on or off the power of the display apparatus 2. The tilt sensor 217 detects the tilt angle of the display apparatus 2. The tilt sensor 217 is mainly used to detect whether the display apparatus 2 is being used in any of the states in FIG. 2A, 2B, or 2C. For example, the display apparatus 2 automatically changes the thickness of characters or the like depending on the detected state.

The serial interface 218 is a communication interface to connect the display apparatus 2 to extraneous sources such as a universal serial bus (USB). The serial interface 218 is used to input information from extraneous sources. The speaker 219 is used to output sound, and the microphone 221 is used to input sound. The wireless communication device 222 communicates with a terminal carried by the user and relays the connection to the Internet, for example.

The wireless communication device 222 performs communication in compliance with Wi-Fi, BLUETOOTH (registered trademark) or the like. Any suitable standard can be applied other than the Wi-Fi and BLUETOOTH (registered trademark). The wireless communication device 222 forms an access point. When a user sets a service set identifier (SSID) and a password that the user obtains in advance in the terminal carried by the user, the terminal is connected to the access point.

It is preferable that two access points are provided for the wireless communication device 222 as follows:
(a) Access point to the Internet; and
(b) Access point to Intra-company network to the Internet.

The access point (a) is for users other than, for example, company staffs. The access point (a) does not allow access from such users to the intra-company network, but allow access to the Internet. The access point (b) is for intra-company users and allows such users to access the intra-company network and the Internet.

The infrared I/F 223 detects an adjacent display apparatus 2. The infrared I/F 223 detects an adjacent display apparatus 2 using the straightness of infrared rays. Preferably, one infrared I/F 223 is provided on each side of the display apparatus 2. This configuration allows the display apparatus 2 to detect the direction in which the adjacent display apparatus 2 is disposed. Such arrangement extends the screen. Accordingly, the user can instruct the adjacent display apparatus 2 to display a previous handwritten object. That is, one display 220 (screen) corresponds to one page, and the adjacent display 220 displays the handwritten object on a separate page.

The power control circuit 224 controls the AC adapter 225 and the battery 226, which are power supplies for the display apparatus 2. The AC adapter 225 converts alternating current shared by a commercial power supply into direct current.

In a case where the display 220 is a so-called electronic paper, the display 220 consumes little or no power to maintain image display. In such case, the display apparatus 2 may be driven by the battery 226. With this structure, the display apparatus 2 is usable as, for example, a digital signage in places such as outdoors where power supply connection is not easy.

The display apparatus 2 further includes a bus line 210. The bus line 210 is an address bus or a data bus that electrically connects the elements illustrated in FIG. 3, such as the CPU 201, to each other.

The touch sensor 216 is not limited to the optical type. In another example, the touch sensor 216 is a different type of detector, such as a capacitance touch panel that identifies the contact position by detecting a change in capacitance, a resistance film touch panel that identifies the contact position by detecting a change in voltage of two opposed resistance films, or an electromagnetic induction touch panel that identifies the contact position by detecting electromagnetic induction caused by contact of an object to a display. The touch sensor 216 can be of a type that does not require an electronic pen to detect whether the pen tip is in contact with the surface of the display 220. In this case, a fingertip or a pen-shaped stick is used for touch operation. In addition, the pen 2500 can have any suitable shape other than a slim pen shape.

### Functions

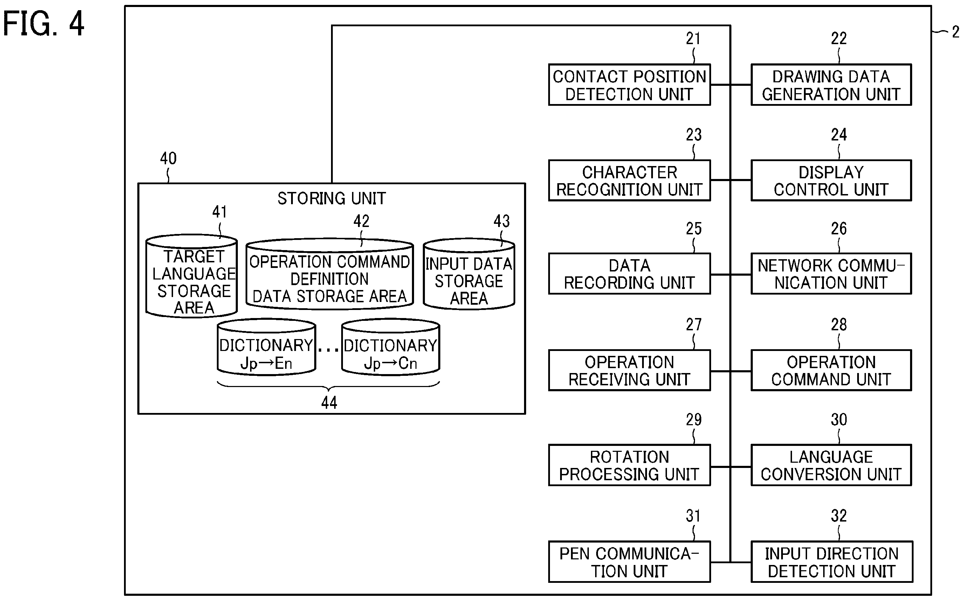

A description is now given of a functional configuration of the display apparatus 2 according to the present embodiment, with reference to FIG. 4. FIG. 4 is a block diagram illustrating an example of the functional configuration of the display apparatus 2 according to the present embodiment. The display apparatus 2 includes a contact position detection unit 21, a drawing data generation unit 22, a character recognition unit 23, a display control unit 24, a data recording unit 25, a network communication unit 26, an operation receiving unit 27, an operation command unit 28 (an operation command processing unit), a rotation processing unit 29, a language conversion unit 30, a pen communication unit 31, and an input direction detection unit 32. The functional units of the display apparatus 2 are implemented by or are caused to function by operation of any of the elements illustrated in FIG. 3 according to an instruction from the CPU 201 according to a program loaded from the SSD 204 to the RAM 203.

The contact position detection unit 21 is implemented by the touch sensor 216 and detects coordinates of the position touched by the pen 2500. The drawing data generation unit 22 acquires the coordinates (i.e., contact coordinates) of the position touched by the pen tip of the pen 2500 from the contact position detection unit 21. The contact position detection unit 21 interpolates and connects the contact coordinates into a coordinate point sequence, to generate stroke data.

The character recognition unit 23 performs character recognition processing on one or more stroke data (hand drafted data), input by the user, in the display language (recognition language) associated with the pen 2500 used by the user, thereby converting the stroke data into one or more character codes. The character recognition unit 23 recognizes characters (of multilingual languages such as English as well as Japanese), numbers, symbols (e.g., %, $, and &), graphics (e.g., lines, circles, and triangles) concurrently with a pen operation by the user. Although various algorithms have been proposed for the recognition method, a detailed description is omitted on the assumption that known techniques are used in the present embodiment.

The display control unit 24 displays, on a display, handwritten object, a character string converted from the handwritten data, and an operation menu to be operated by the user. The data recording unit 25 stores hand drafted data input on the display apparatus 2, a converted character string, a screenshot on a personal computer (PC) screen, a file, and the like in a storing unit 40. The network communication unit 26 connects to a network such as a local area network (LAN), and transmits and receives data to and from other devices via the network.

The operation command unit 28 detects whether or not the character string recognized by the character recognition unit 23 corresponds to an operation command, and executes the detected operation command when the user presses the operation command.

The rotation processing unit 29 rotates the entire image or a character string in accordance with an operation command or a user operation. In the present embodiment, the display apparatus 2 rotates a character string or the entire image including the character string.

The language conversion unit 30 converts the character string candidate selected by the user into a target language associated with the pen 2500 used by the user. That is, the language conversion unit 30 performs translation.

The pen communication unit 31 controls the communication circuit 215a to receive the pen ID from the pen 2500. The pen 2500 transmits the pen ID at least once when an end of the pen 2500 is pressed against the display. With this configuration, the display apparatus 2 identifies the pen 2500 with which the hand drafted input is made.

The input direction detection unit 32 detects a display direction that faces the user who has input handwriting based on the hand drafted data. Alternatively, the input direction detection unit 32 detects the display direction facing the user who has input handwriting using an input device, according to hand drafted data input in a predetermined method.

The display apparatus 2 includes the storing unit 40 implemented by, for example, the SSD 204 or the RAM 203 illustrated in FIG. 3. The storing unit 40 includes a target language storage area 41, an operation command definition data storage area 42, an input data storage area 43, and dictionaries 44 (e.g., bilingual dictionaries).

**Table 1**

| Pen ID | Display direction | Display language | Target language |
|---|---|---|---|
| 1 | 0° | Japanese | English |
| 2 | 180° | English | Japanese |
| 3 | 0° | Japanese | Chinese |
| ... | ... | ... | ... |

Table 1 illustrates association among the display direction, the display language, and the target language registered in the target language storage area 41. In the target language storage area 41, the display direction, the display language, and the target language are registered in association with the pen ID. For example, in the case of the pen 2500 having the pen ID "1," the display direction is 0 degree, the display language is Japanese, and the target language is English.

The pen ID is information identifying the pen 2500. Each pen 2500 is assigned with a pen ID in advance.

For example, the display directions are determined as 90 degrees, 180 degrees, and 270 degrees counterclockwise from a reference display direction that is set to 0 degree. The display direction indicates the direction facing the user who is operating the pen 2500. When the character string is displayed in the display direction, the character string faces the user using the pen 2500.

The display language is the language in which the character recognition unit 23 recognizes a character from hand drafted data. The display language is the language of the character string candidate 539 displayed on the operation guide 500.

The target language is the language into which the language conversion unit 30 converts (translates) the character string from the display language.

According to the association between the display language and the target language in Table 1 (association information), the user of the pen 2500 assigned with the pen ID "1" (an example of a first electronic pen) is a Japanese speaker and can communicate with an English speaker. The user of the pen 2500 assigned with the pen ID "2" (an example of a second electronic pen) is an English speaker and can communicate with a Japanese speaker. The user of the pen 2500 assigned with the pen ID "3" (an example of a third electronic pen) is a Japanese speaker and can communicate with a Chinese speaker.

**Table 2**

| Recognized character string | Command name | Processing |
|---|---|---|
| Rotate 90, 180, 270 | Rotate display by 90° | Rotate entire image by 90° |
| | Rotate display by 180° | Rotate entire image by 180° |
| | Rotate display by 270° | Rotate entire image by 270° |
| Japanese | Set to Japanese (display language) | Set display language associated with the pen to Japanese |
| | Set to Japanese (display language) | Set target language associated with the pen to Japanese |
| English | Set to English (display language) | Set display language associated with the pen to English |
| | Set to English (display language) | Set target language associated with the pen to English |

Table 2 schematically illustrates operation command definition data stored in the operation command definition data storage area 42. The operation command definition data defines an operation command for a user to instruct the display apparatus 2 in association with a recognized character string obtained by character recognition.

For example, when the character string "rotate," "90," "180," or "270" is recognized from the hand drafted data, the corresponding operation command is "rotate display by 90 degrees," "rotate display by 180 degrees," or "rotate display by 270 degrees." The display apparatus 2 displays such an operation command and receives an operation from the user. When the operation command is selected, the operation command unit 28 executes the content described in the item "processing." For example, the operation command unit 28 instructs the rotation processing unit 29 to rotate a character string or an image.

When a character string "Japanese" is recognized, the corresponding operation command names are "set to Japanese (display language)" and "set to Japanese (target language)." When the operation command is selected, the operation command unit 28 registers the pen ID and the display language (or the target language) specified by the operation command in the target language storage area 41.

**Table 3**

| |
|---|
| DataId="4" Type="Text" Penld="2" Angle="180 dig" "StartPoint="x1,y1" |
| StartTime="yyyy-mm-ddThh:mm:ss.sss+09:00" EndPoint="xn,yn" EndTime="yyyy-mm-ddThh:mm:ss.sss+09:00" FontName="POP" FontSize="50.0 pt" "Text= 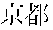 |
| Language="Japanese" |

Table 3 schematically presents the content of the input data storage area 43. The input data storage area 43 stores attributes of data input by the user. The input data is recorded for each object (e.g., one stroke data, one character string, or one image).

"DataId" is information identifying the input data.

"Type" is the type of input data and includes stroke, text, and image. The attribute held by the input data may be different depending on type. Table 3 presents a case where the "type" is "text." The text represents a character string, and the image is an image.

"PenId" is a pen ID identifying the pen 2500 used to input the character string. "Angle" is the display direction of the character string.

"StartPoint" is the coordinates of the upper left apex of the circumscribed rectangle of the character string.

"StartTime is the time of start of writing the character string by the user.

"EndPoint" is the coordinates of the lower right apex of the circumscribed rectangle of the character string.

"EndTime" is a time when the user has finished writing the character string. "FontName" is the font name of the character string.

"FontSize" is the character size.

"Text" is an input text (character code).

"Language" is the language of the character string. In the present embodiment, the display language or the target language is set.

### Example of Display of Selectable Candidates

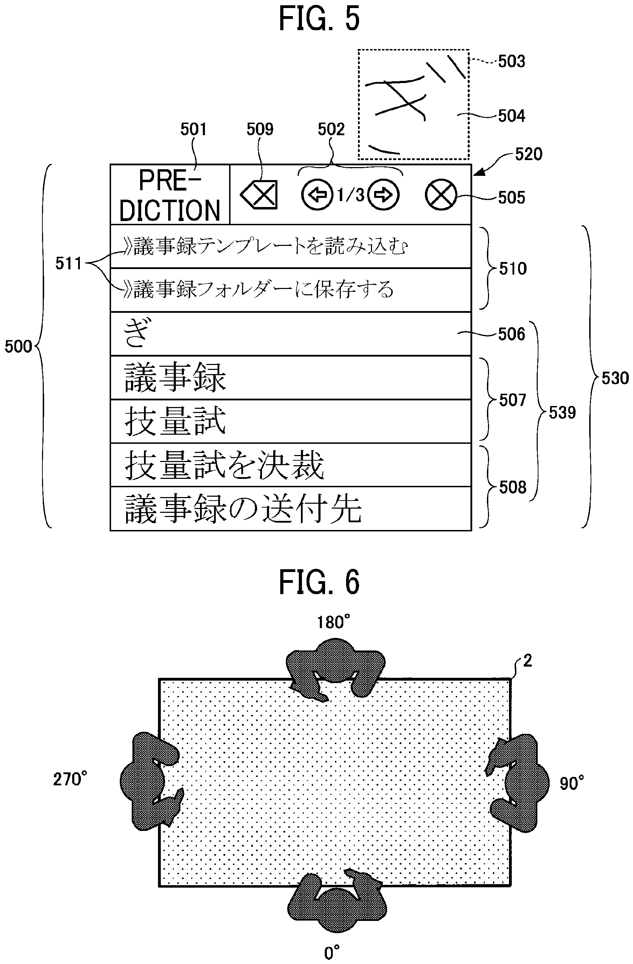

Next, with reference to FIG. 5, a description is given of the operation guide 500 displayed at the time of converting handwriting. FIG. 5 illustrates an example of the operation guide 500 and selectable candidates 530 displayed by the operation guide 500. The operation guide 500 is displayed in response to hand drafted input by the user. In the example of FIG. 5, a handwritten object 504 is displayed based on the hand drafted input. The operation guide 500 displays a recognized character string candidate 506 (candidate of the character string recognized from the handwriting), converted character string candidates 507, predicted converted-character string candidates 508, and operation command candidates 510. The selectable candidates 530 includes the recognized character string candidate 506, the converted character string candidates 507, the predicted converted-character string candidates 508, and the operation command candidate 510. The selectable candidates 530 other than the operation command candidates 510 are referred to as character string candidates 539.

The handwritten object 504 is a character " 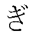 " (Japanese hiragana character, pronounced as "gi)" handwritten by the user. The display apparatus 2 displays a rectangular handwriting area enclosure 503 enclosing the handwritten object 504. In the example illustrated in FIG. 5, the operation guide 500 is displayed in response to input of one character as an example, but the time of display thereof is not limited thereto. The operation guide 500 is displayed in response to suspension of handwriting by the user. Therefore, the number of characters in the handwritten object 504 is any number.

As each of the recognized character string candidate 506, the converted character string candidates 507, and the predicted converted-character string candidates 508, one or more candidates are arranged in descending order of probability. The recognized character string candidate 506 " 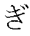 " (Japanese hiragana character, pronounced as "gi)" is a candidate as the result of handwriting character recognition. In this example, the character recognition unit 23 has correctly recognized " 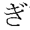 " (Japanese hiragana character, pronounced as "gi)." Note that, although Japanese is handwritten in this example, the language of hand drafted input is not limited thereto. For example, the display apparatus 2 receives handwritten English "M" and displays character string candidates such as "Minutes."

The recognized character string candidate 506 " 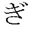 " (Japanese hiragana character, pronounced as "gi)" is converted into a kanji character (for example, " 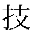 " pronounced as "gi" and having a meaning "technique)." As the converted character string candidates 507, character strings (for example, idioms) including the kanji " 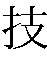 " are presented. In this example, " 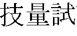 " is an abbreviation of " 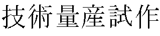 " (Japanese kanji character, meaning "technical pre-production" and pronounced as "gijutsu-ryousan-shisaku"). The predicted converted-character string candidates 508 are candidates predicted from the converted character string candidates 507, respectively. In this example, as the predicted converted-character string candidates 508, " 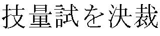 " (meaning "approving technical pre-production)" and " 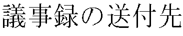 " (meaning "destination of minutes)" are displayed.

The operation command candidates 510 are candidates of predefined operation commands (command such as file operation or text editing) displayed in accordance with the recognized character. In the example of FIG. 5, a line head character "»" 511 indicates an operation command candidate. In the example in FIG. 5, the converted character string candidates 507 " 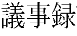 " (pronounced as "gijiroku" and meaning "minutes") of " 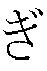 " (Japanese hiragana character, pronounced as "gi") partially matches the definition data, and the operation command candidates 510 including " 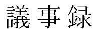 " are displayed. The operation command candidates 510 are " 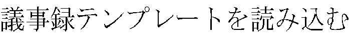 " that means reading minutes templates," and " 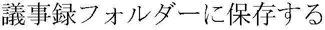 " that means storing in a minutes folder.

The operation command candidate 510 is displayed when the operation command definition data including the converted character string is found, and is not displayed in the case of no-match. In the present embodiment, the operation command candidates 510 related to conversion are displayed.

The operation guide 500 includes an operation header 520 including buttons 501, 502, 505, and 509. The button 501 is a graphical representation for receiving an operation of switching between predictive conversion and kana conversion. The button 502 is a graphical representation for receiving page operation of the candidate display. In the example illustrated in FIG. 5, there are three candidate display pages, and the first page is currently displayed. The button 505 is a graphical representation for receiving closing of the operation guide 500. When the operation receiving unit 27 receives pressing by the user of the button 505, the display control unit 24 deletes the displayed objects other than the handwritten object. The button 509 is a graphical representation for receiving batch deletion of the display. When the operation receiving unit 27 receives pressing by the user of the button 509, the display control unit 24 deletes the operation guide 500 and the handwritten object 504 illustrated in FIG. 5, thereby enabling the user to perform handwriting input from the beginning.

### Registration of Display Direction and Target Language

FIG. 6 is a diagram illustrating an example of the display direction of the display apparatus 2. In the present embodiment, a direction perpendicular to a reference side of the display from the center of the display is set to 0 degree. The directions perpendicular to other sides of the display are set to 90 degrees, 180 degrees, and 270 degrees counterclockwise, respectively. The display directions facing the users present at 0 degree, 90 degrees, 180 degrees, and 270 degrees are referred to as a 0-degree display direction, a 90-degree display direction, a 180-degree display direction, and a 270-degree display direction.

There are several methods for the display apparatus 2 to determine in which direction (on which of the four sides) the user who is inputting handwriting is present. As one method, the input direction detection unit 32 determines in which direction (on which of the four sides) the user is present based on the direction of handwriting by the user.

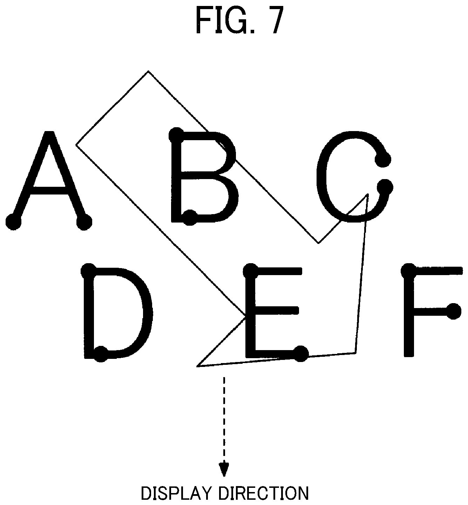

FIG. 7 is a diagram schematically illustrating the correspondence between the user's handwriting direction and the display direction. For example, in a case where the coordinates of the stroke data move from left to right and from top to bottom (horizontal writing from left to right), the display direction corresponds to the side present from top to bottom direction. In FIG. 7, the start point and the end point of each character are indicated by black circles, and the characters as a whole move from the upper left to the lower right.

Similarly, in a case where the coordinates of the stroke data move from top to bottom and from right to left (vertical writing from top to bottom), the display direction corresponds to the side present from top to bottom direction. In this way, the input direction detection unit 32 estimates in which direction (on which of the four sides) the user is present based on the hand drafted data.

The correspondence between the coordinates of the stroke data and the display direction may be generated by the manufacturer of the display apparatus 2 through machine learning. For example, time-series stroke data is input to a neural network, and the display direction is given as teacher data, so that the input direction detection unit 32 is obtained as a learned model.

In FIG. 6, the display apparatus 2 has the four display directions of 0 degree, 90 degrees, 180 degrees, and 270 degrees, but the display directions may be set more finely. The display directions may be set at intervals of 45 or 30 degrees, for example.

As another method, the display apparatus 2 uses the pen 2500 to determine in which direction (on which of the four sides) the user is present. In this method, first, the display direction is associated with the pen 2500.

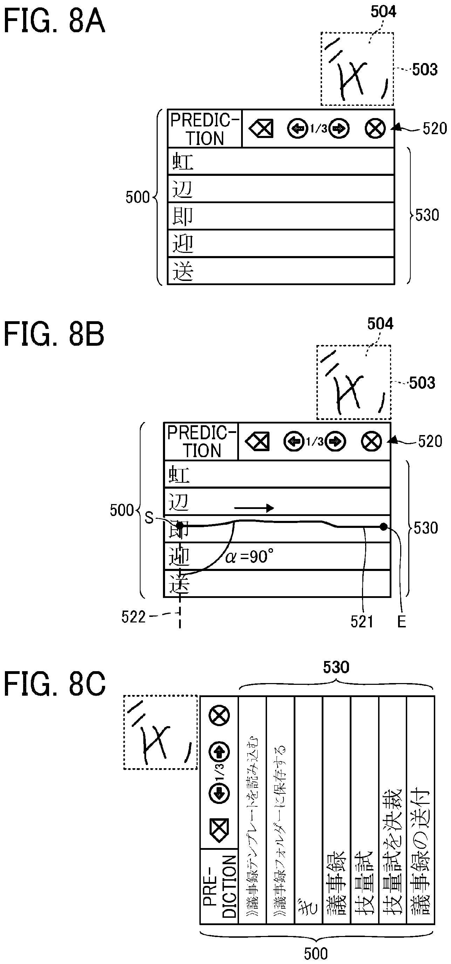

FIGS. 8A to 8C are diagrams illustrating an example of a method of receiving angle information. FIGS. 8A to 8C illustrate a case where the display apparatus 2 receives angle information input by a user present in the 90-degree direction (see FIG. 6) of the display apparatus 2. Since a character or the like handwritten from the 90-degree direction is correctly recognized when rotated clockwise by 90 degrees, the display direction of 90 degrees is input.

FIG. 8A illustrates a state in which the operation guide 500 is displayed since the user who is present in the 90-degree direction of the display apparatus 2 has handwritten " 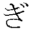 " (Japanese hiragana character, pronounced as "gi)." The display apparatus 2 performs character recognition of " 9" handwritten from the 90-degree direction with the display direction kept at the initial value of 0 degree. Accordingly, selectable candidates 530 " 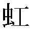 " (Japanese kanji, meaning "rainbow"), " 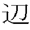 " (Japanese kanji, meaning "side"), " 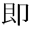 " (Japanese kanji, meaning "right away"), " 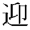 " (Japanese kanji, meaning "greet"), and " 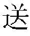 " (Japanese kanji, meaning "send") different from expectations are displayed.

For inputting the angle information, the user handwrites a straight line in the operation guide 500 from the top to the bottom when viewed from the user. FIG. 8B illustrates a straight line 521 as an example of the straight line for the angle information. An angle α between the 0-degree direction and the straight line 521 in the counterclockwise direction is the display direction. Specifically, a straight line 522 is drawn in the 0-degree direction from a start point S of the straight line 521 input by the user, and the angle α formed by the straight line 522 and the straight line 521 input by the user in the counterclockwise direction is the display direction. Therefore, in FIG. 8B, the display apparatus 2 receives 90 degrees as the display direction input by the user.

In an example method, a straight line is detected by converting coordinates from the start point S to an end point E into a straight line by a least squares method, and comparing the obtained correlation coefficient with a threshold value, to determine whether the correlation coefficient represents a straight line.

Immediately after the user starts drawing the straight line 521 (immediately after the user touches the start point S of the straight line 521 with the pen 2500), the display apparatus 2 erases the operation guide 500. Immediately after the end of drawing the straight line 521 (immediately after the pen 2500 is separated from the end point E of the straight line 521), the display apparatus 2 searches for the value closest to the angle α among 90 degrees, 180 degrees, 270 degrees, and 0 degrees, and determines the closest value as the display direction. The angle α itself may be angle information. This display direction is associated with the pen 2500 used.

When the tip of the pen 2500 is pressed for handwriting or the like, the pen 2500 transmits the pen ID to the display apparatus 2. Therefore, the display apparatus 2 associates the display direction with the pen 200.

FIG. 8C illustrates the operation guide 500 immediately after the operation illustrated in FIG. 8B. Since 90 degrees is set as the display direction of the pen 2500, the hand drafted data is internally rotated by 90 degrees in the clockwise direction for character recognition, and the operation guide 500 is rotated counterclockwise by 90 degrees and displayed. The display apparatus 2 may allow the user to manually input angle information from a menu.

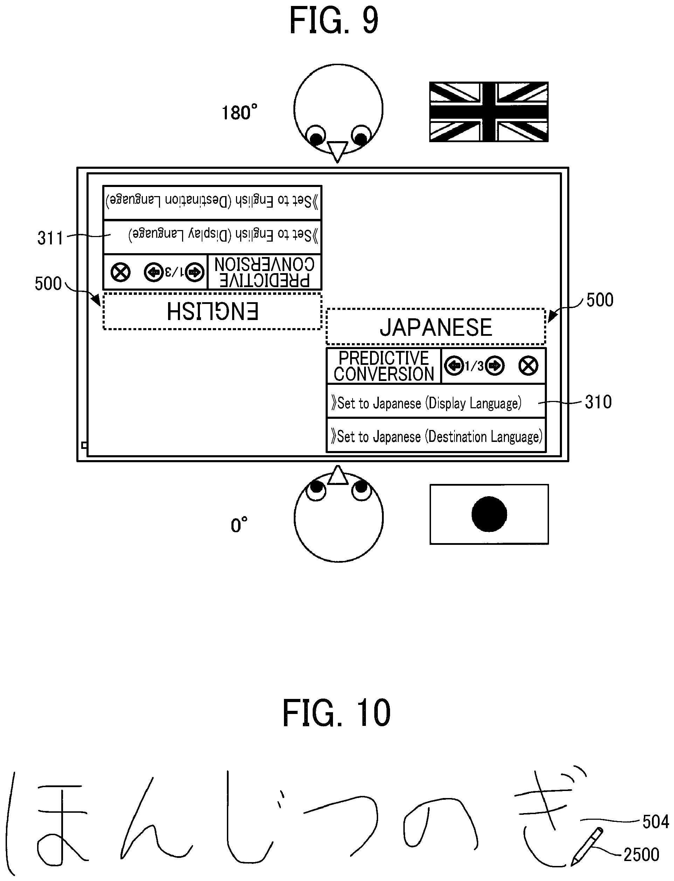

FIG. 9 is a diagram illustrating a method in which a user associates a display direction with a target language. In FIG. 9, a user faces the 0-degree display direction and another user faces the 180-degree display direction. As described with reference to FIG. 7 or 8A to 8C, the display apparatus 2 determines in which direction (on which of the four sides) the user is present based on the hand drafted data. Alternatively, the display direction is already associated with the pen 2500 used by each user.

A user facing the 0-degree display direction handwrites "Japanese" for invoking an operation command of language setting. As a result, the operation guide 500 displays the operation commands 310 of "set to Japanese (display language)" and "set to Japanese (target language)." When the user selects the operation command "set to Japanese (display language)," the operation command unit 28 sets, in association with the pen ID, the display language "Japanese" to the 0-degree display direction detected by the input direction detection unit 32 based on the hand drafted data of "Japanese." The pen ID is transmitted from the pen 2500 during handwriting. Alternatively, the operation command unit 28 sets, in association with the pen ID, the display language "Japanese" to the 0-degree display direction of the pen 2500 used by the user facing the 0-degree display direction. The same applies to a case where "set to Japanese (target language)" is selected.

Further, the user facing the 180-degree display direction handwrites "English" that invokes the operation command of language setting. As a result, the operation guide 500 displays the operation commands 311 of "set to English (display language)" and "set to English (target language)." When the user selects the operation command of "set to English (display language)," the operation command unit 28 sets, in association with the pen ID, the display language "English" to the 180-degree display direction detected by the input direction detection unit 32 based on the hand drafted data of "English." Alternatively, the operation command unit 28 sets, in association with the pen ID, the display language "English" to the 180-degree display direction of the pen 2500 used by the user facing the 180-degree display direction. The same applies to a case where "set to English (target language)" is selected. Thus, the target language storage area 41 storing the association illustrated in Table 1 is generated.

The display apparatus 2 allows the user to cancel the association among the pen ID, the display direction, and the target language registered in the target language storage area 41 by executing a predetermined operation command.

The hand drafted data input by the pen 2500 having the pen ID "1" is recognized in the display language associated with the pen ID "1." For example, " 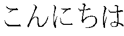 " (Japanese meaning "hello") handwritten by the pen 2500 having the pen ID "1" is recognized as Japanese " 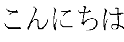 ." Further, " 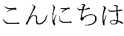 " is converted into English, which is the target language, in response to a user operation.

### Conversion of Hand Drafted Data

Next, a description is given of an example of conversion of hand drafted data, with reference to FIGS. 10 to 18. FIG. 10 illustrates the handwritten object 504 handwritten by the user. In FIG. 10, the pen 2500 having the pen ID "1" is used to handwrite Japanese Katakana characters " 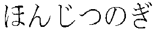 " on the display (touch panel). The communication circuit 215a of the display apparatus 2 receives the pen ID "1" from the pen 2500.

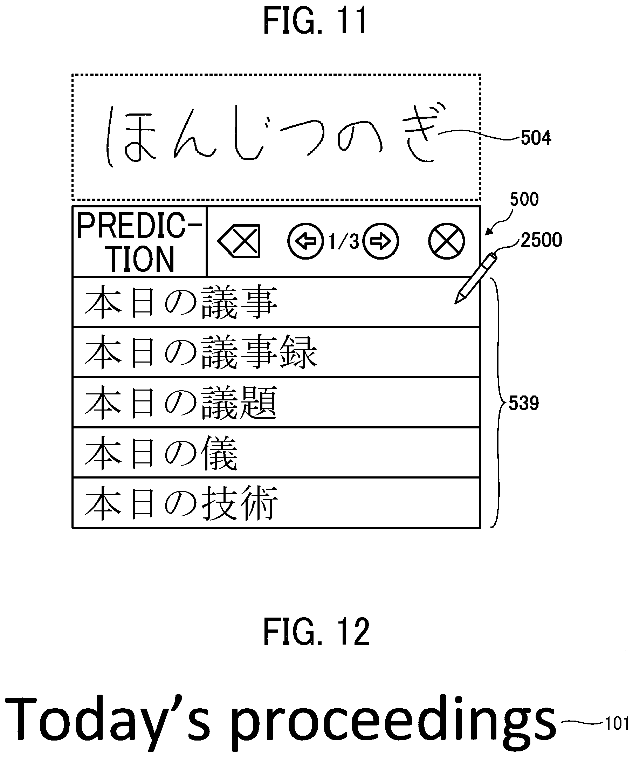

FIG. 11 illustrates five character string candidates 539 displayed by the display control unit 24 as a result of character recognition on " 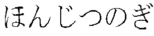 " performed by the character recognition unit 23. In FIG. 11, the operation guide 500 displays five character string candidates 539 " 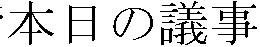 " (meaning today's proceeding), " 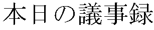 " (meaning today's minutes), " 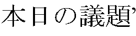 " (meaning today's subjects), " 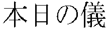 " (meaning today's ceremony), and " 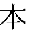 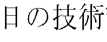 " (meaning today's technology). Since the display language set for the pen 2500 having the pen ID "1" is Japanese, the character recognition unit 23 has converted the handwriting into the Japanese character string candidates 539.

FIG. 12 illustrates the converted character string 101 converted into the target language, which is displayed when the user selects a desired one of the character string candidates 539. In FIG. 11, the user has selected " 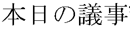 " with the pen 2500. Since the pen 2500 has pressed to the inside of the operation guide 500, the language conversion unit 30 determines to convert the character string candidate into the target language set for the pen 2500. Since the target language set for the pen 2500 having the pen ID "1" is English, the language conversion unit 30 converts the selected Japanese character string candidate 539 " 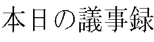 " into English. Therefore, in FIG. 12, the display control unit 24 displays the converted character string 101 "today's proceedings." In response to selection of the character string candidate 539, the operation guide 500 is deleted.

Assume that, in FIG. 12, the user of the pen 2500 having the pen ID "1" (i.e., "first user") determines that the converted character string 101 converted from the character string candidate 539 selected by the first user does not suit the communication with the English speaker using the pen 2500 having the pen ID "2" (i.e., "second user"). That is, the first user determines that conversation does not proceed and an inappropriate converted character string 101 is displayed. The user of the pen 2500 having the pen ID "1" attempts to reconvert the converted character string 101.

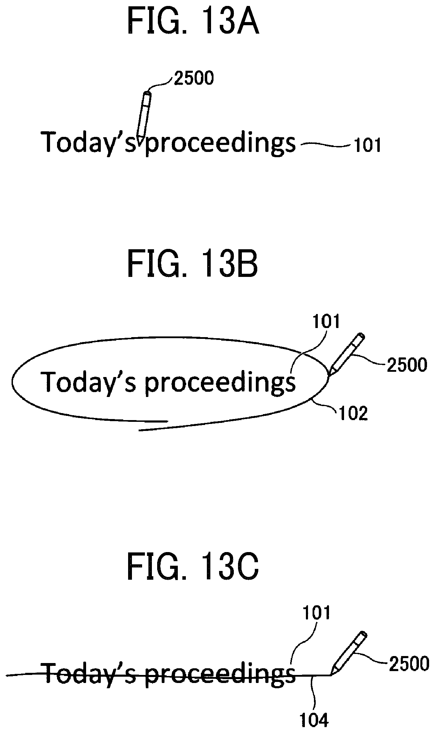

FIGS. 13A to 13C are diagrams illustrating reconversion of the converted character string 101. The user selects "today's proceedings" which is the converted character string 101.

FIG. 13A illustrates a method for the display apparatus 2 to receive selection of the converted character string 101 based on holding down of the converted character string 101 with the pen 2500 having the pen ID "1" by the user. When the coordinates of the tip of the pen 2500 within the circumscribed rectangle of the converted character string 101 and the pen 2500 is pressed for a predetermined time or longer, the language conversion unit 30 determines that the converted character string 101 has been selected.

FIG. 13B illustrates a method for the display apparatus 2 to receive selection of the converted character string 101 based on the frame line 102 enclosing the converted character string 101 with the pen 2500 having the pen ID "1." When the right end, left end, top end, and lower end coordinates of the frame line 102 are outside the circumscribed rectangle of the converted character string 101, the language conversion unit 30 determines that the converted character string 101 has been selected.

FIG. 13C illustrates a method for the display apparatus 2 to receive selection of the converted character string 101 based on a superimposed line 104 on the converted character string 101, drawn with the pen 2500 having the pen ID "1." The width direction of the converted character string 101 is the X-axis direction, and the height direction is the Y-axis direction. When the entire Y coordinates of the superimposed line 104 are included in the height direction of the circumscribed rectangle of the converted character string 101 (between the minimum value and the maximum value of the Y coordinates of the circumscribed rectangle), the language conversion unit 30 determines that the converted character string 101 has been selected.

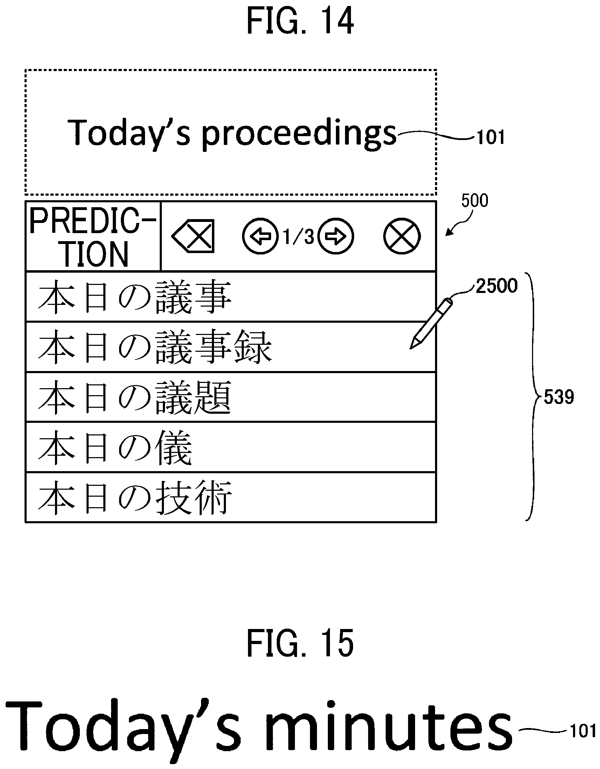

FIG. 14 illustrates the five character string candidates 539 displayed in response to selection of the converted character string 101 "today's proceedings." The data recording unit 25 stores, in the input data storage area 43, the character string candidates 539 (illustrated in FIG. 11) converted by the character recognition unit 23, and the display control unit 24 again displays the character string candidates 539. Alternatively, the character recognition unit 23 may store the handwritten object 504 " 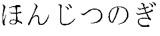 " and again performs the character recognition so that the display control unit 24 again displays the five character string candidates 539.

In FIGS. 13A to 13C, the converted character string 101 is selected by the pen 2500 having the pen ID "1." Accordingly, the character recognition unit 23 performs recognition in Japanese (see Table 1), and the display control unit 24 also displays the Japanese character string candidates 539. As will be described later, when the converted character string 101 is selected by the pen 2500 having the pen ID "2," the character string candidates 539 are displayed in English (see Table 1).

Since the operation guide 500 including the character string candidates 539 is displayed again as illustrated in FIG. 14, the user of the pen 2500 having the pen ID "1" can select the character string candidate again. For example, in FIG. 14, the user selects " 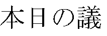 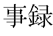 " (meaning today's minutes) with the pen 2500.

FIG. 15 illustrates a converted character string 101 in the target language, displayed in response to selection of " 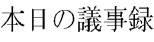 " with the pen 2500 by the user. Since the pen 2500 has pressed to the inside of the operation guide 500 in FIG. 14, the language conversion unit 30 determines to convert the character string candidate into the target language set for the pen 2500. Since the target language set for the pen 2500 having the pen ID "1" is English, the language conversion unit 30 converts the selected Japanese character string candidate 539 " 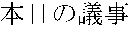 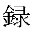 " into English. Therefore, in FIG. 15, the display control unit 24 displays the converted character string 101 "today's minutes."

In response to selection of the character string candidate 539, the operation guide 500 is deleted.

As described above, the display apparatus 2 according to the present embodiment enables the user to select, from a plurality of character string candidates, a character string to be converted into the target language, thereby facilitating smooth communication. Further, in response to the user's selecting the converted character string 101, the display apparatus again displays the plurality of character string candidates to be converted, even after one of the candidates has been converted into the target language. Therefore, the display apparatus 2 receives the selection of another one from the character string candidates and converts the selected character string into the target language, without user's repeatedly inputting the handwriting.

The character string may be reconverted by the pen 2500 with the pen ID "2."

When the communication is not successful as described with reference to FIGS. 13A to 13C, the user of the pen 2500 having the pen ID "2" may select "today's proceedings."

Since the converted character string 101 is selected by the pen 2500 having the pen ID "2," the language conversion unit 30 displays the recognition result in English (see Table 1).

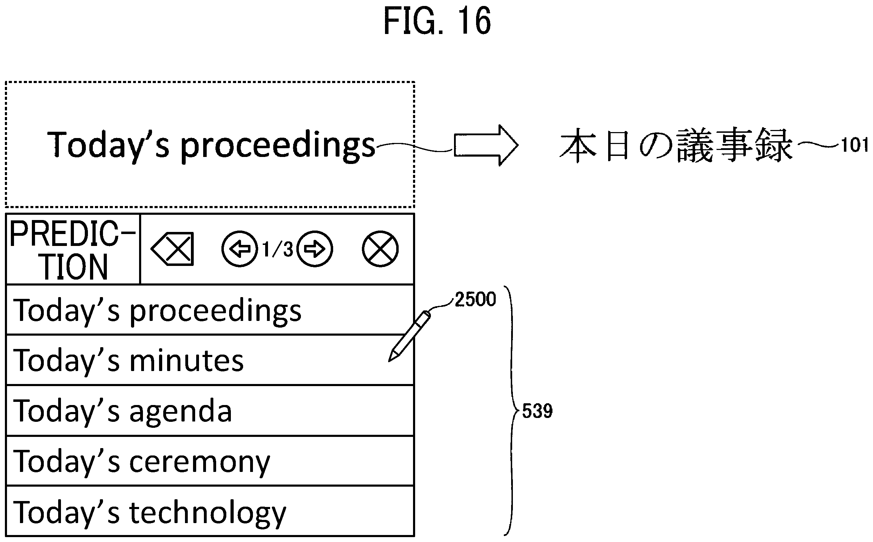

FIG. 16 illustrates the character string candidates 539 displayed when the converted character string 101 "today's proceedings" is selected with the pen 2500 having the pen ID "2" in FIG. 12. The language conversion unit 30 converts the five character string candidates 539 of " 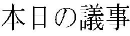 ," "today's minutes," " 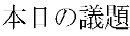 ," " 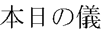 ," and " 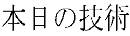 " (see FIG. 11) into English, which is the display language of the pen 2500 having the pen ID "2."

The user of the pen 2500 having the pen ID "2" (assumed to be an English speaker) can select from the character string candidates 539 a character string candidate to be displayed in a language to be understood by the user of the pen 2500 having the pen ID "1." For example, in a case where the user of the pen 2500 having the pen ID "2" selects another character string candidate 539 "today's minutes" with the pen 2500, since the target language of the pen 2500 having the pen ID "2" is Japanese, the language conversion unit 30 converts "today's minutes" into " 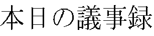 ." Therefore, in FIG. 16, the converted character string 101 is Japanese.

As described above, since the English speaker can directly select the character string candidate 539 with his or her pen 2500, communication is facilitated.

The character string may be reconverted by the pen 2500 with the pen ID "3."

According to Table 1, the pen ID "3" is associated with Japanese as the display language and Chinese as the target language. Therefore, in FIG. 11, when the user of the pen 2500 with the pen ID "3" selects a character string candidate 539, the language conversion unit 30 converts the selected character string candidate 539 into Chinese.

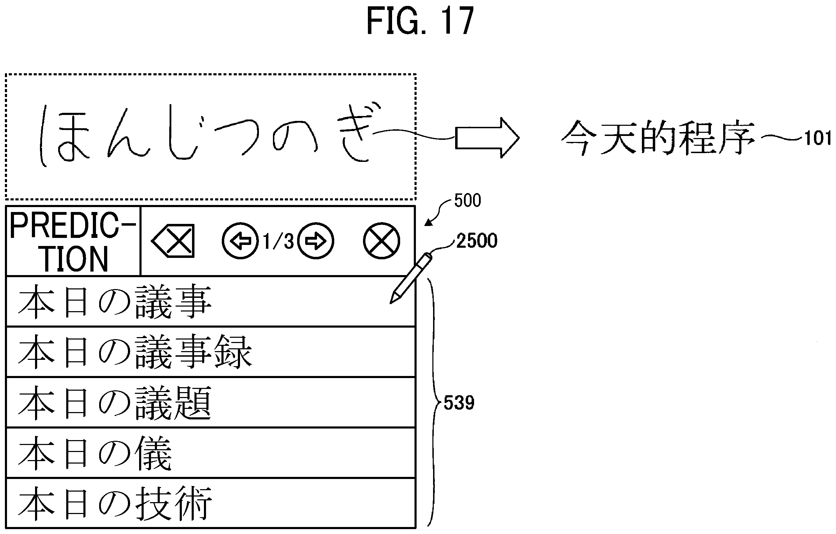

FIG. 17 illustrates an example of conversion when the user of the pen 2500 with the pen ID "3" selects the character string candidate 539 in FIG. 11. It is assumed that the user selects the character string candidate 539 " 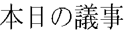 " in FIG. 11 with the pen 2500 having the pen ID "3." Since the pen 2500 has pressed to the inside of the operation guide 500, the language conversion unit 30 determines to convert the character string candidate 539 " 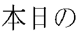 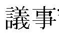 " into the target language set for the pen 2500. Since the target language associated with the pen ID "3" is Chinese, the language conversion unit 30 converts the selected Japanese character string candidate 539 into Chinese.

In FIG. 17, the display control unit 24 displays the converted character string 101 " 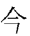 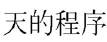 " converted into Chinese. In response to selection of the character string candidate 539, the operation guide 500 is deleted.

In this way, the display apparatus 2 converts the character string candidate into the target language associated with the pen 2500 used by the user.

Conversion into Target Language Associated with Pen

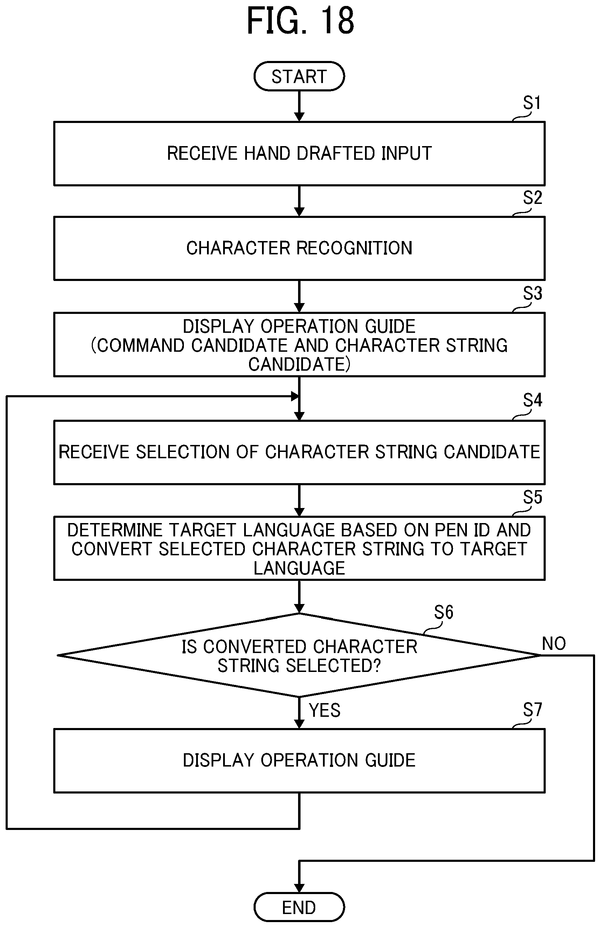

FIG. 18 is an example of a flowchart illustrating a process of the display apparatus 2 for converting the selected character string candidate 539 into the target language associated with the pen 2500.

First, the contact position detection unit 21 receives hand drafted input in accordance with the coordinates of the detected contact position with the pen 2500 (S1). The drawing data generation unit 22 interpolates the coordinate points, to generate hand drafted input data.

When a predetermined time elapses after the user separates the pen 2500 from the display, the character recognition unit 23 performs character recognition on the hand drafted data (S2). The character recognition unit 23 acquires from the target language storage area 41 (see Table 1) the display language associated with the pen ID received by the pen communication unit 31 from the pen 2500. The character recognition unit 23 recognizes characters from the hand drafted data in the acquired display language.

The display control unit 24 displays the operation guide 500 (S3). The display control unit 24 displays at least the character string candidates 539. The display control unit 24 displays, if any, the operation command candidate 510 that matches the recognized character string candidate 539.

When the user selects the character string candidate 539 with the pen 2500, the contact position detection unit 21 receives the selection of the character string candidate 539 (S4). The contact position detection unit 21 detects coordinates of selection by the pen 2500. In a case where the pen 2500 has pressed to the inside of the operation guide 500, the language conversion unit 30 determines to convert the character string candidate into the target language set for the pen 2500. The language conversion unit 30 converts the character string candidate 539 into the target language associated with the pen ID received, by the pen communication unit 31, from the pen 2500 (S5). The display control unit 24 displays the converted character string 101 and deletes the operation guide 500 in response to the selection of the character string candidate 539.

Next, the language conversion unit 30 determines whether or not the converted character string 101 has been selected by the pen 2500 (S6). When the selection is not detected, the operation of FIG. 18 ends.

When the converted character string 101 is selected by the pen 2500, the display control unit 24 displays the operation guide 500 again (S7). The character recognition unit 23 acquires from the target language storage area 41 (see Table 1) the display language associated with the pen ID received by the pen communication unit 31 from the pen 2500 having selected the converted character string 101. When the character recognition unit 23 has converted (recognized) the hand drafted data into the character string candidates 539 in the associated display language, the display control unit 24 displays the stored character string candidates 539. When having not converted the hand drafted data into the character string candidates 539 in the associated display language, the character recognition unit 23 converts the hand drafted data into the character string candidates 539 in the associated display language, and the display control unit 24 displays the character string candidates 539.

Thereafter, the process returns to step S4, and the display apparatus 2 enables the user to repeatedly select one of the character string candidates 539 with which communication is successful.

### Rotation of Converted Character String

As illustrated in Table 1, the display direction is registered in association with the pen ID in the target language storage area 41. When a character string is displayed in the display language in this display direction, the character string faces the user of the pen 2500 and can be easily read. Therefore, when the display apparatus 2 displays the converted character string 101, the rotation processing unit 29 may rotate the converted character string 101 in the display direction associated with another pen 2500 (pen ID) associated with the display language that is the same language as the target language associated with the pen ID transmitted from the pen 2500 having selected the character string candidate 539 (or the converted character string 101).

For example, the target language associated with the pen ID "1" is English, and the display language associated with the pen ID "2" is English. Therefore, the rotation processing unit 29 rotates the converted character string 101 converted into English to 180°, which is the display direction associated with the pen ID "2," and displays the converted character string 101.

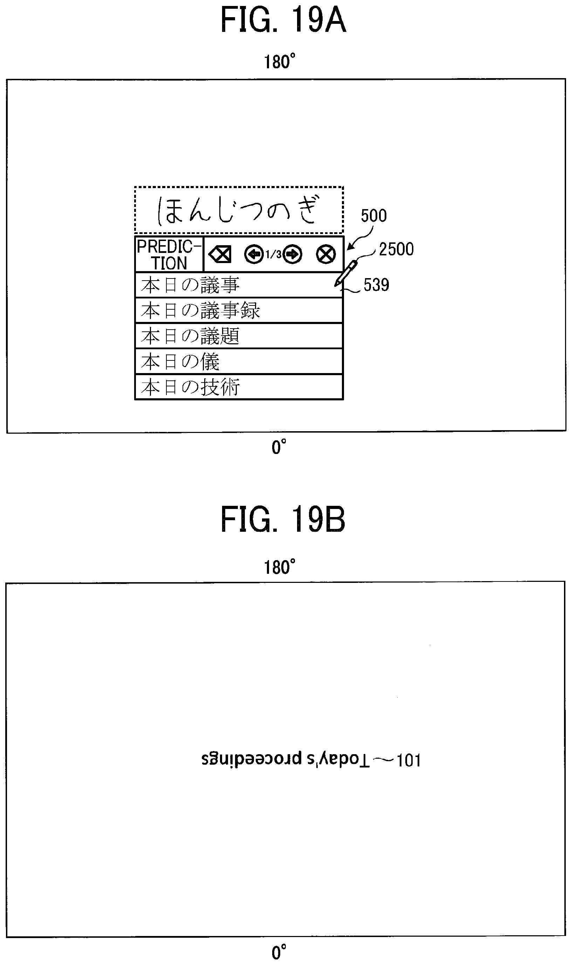

FIGS. 19A and 19B are diagrams illustrating the rotation of the converted character string 101. It is assumed that the display direction is preset as illustrated in the drawings. FIG. 19A illustrates the same state as FIG. 11. In response to selection of the character string candidate 539 by the pen 2500 having the pen ID "1," the display apparatus 2 converts the character string candidate 539 into English. Since the target language storage area 41 stores the pen ID "2" associated with English as the display language and the display direction associated with the pen ID "2" is 180°, the rotation processing unit 29 rotates the converted character string 101 (in English) to the 180-degree display direction.

FIG. 19B illustrates the converted character string 101 rotated to the 180-degree display direction. Therefore, the user facing to the 180-degree display direction can easily read the converted character string 101.

Next, it is assumed that communication does not proceed and the user selects the converted character string 101 with the pen 2500 having the pen ID "1" in the state of FIG. 19B. In this case, since the display direction associated with the pen ID "1" is 0°, the display control unit 24 displays the operation guide 500 in the 0-degree display direction.

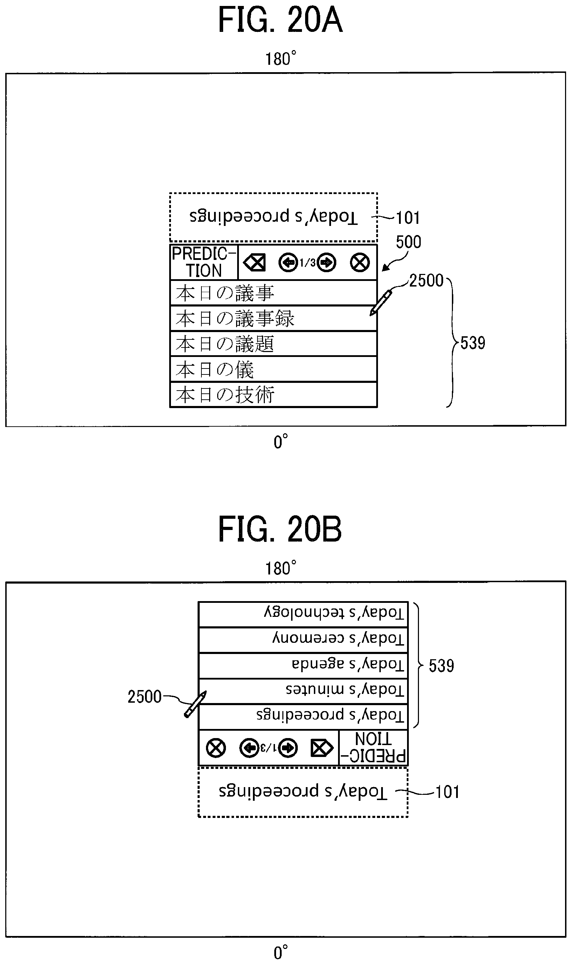

FIG. 20A illustrates the converted character string 101 in the 180-degree display direction and the operation guide 500 in the 0-degree display direction. This configuration enables the user of the pen 2500 having the pen ID "1" to easily read the character string candidates 539.

It is assumed that communication does not proceed well and the user selects the converted character string 101 with the pen 2500 having the pen ID "2" in the state of FIG. 19B. In this case, since the display direction associated with the pen ID "1" is 180 degrees, the display control unit 24 displays the operation guide 500 in the 180-degree display direction.

FIG. 20B illustrates the converted character string 101 and the operation guide 500 displayed in the 180-degree display direction. This configuration enables the user of the pen 2500 having the pen ID "2" to easily read the character string candidates 539.

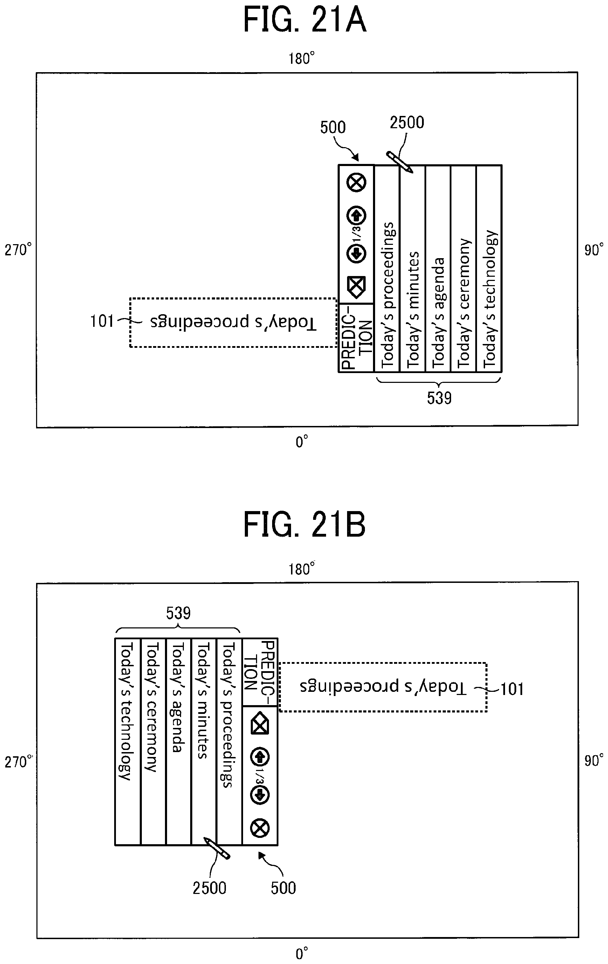

Although FIGS. 20A and 20B illustrate the case where the display directions associated with the pen IDs are 0° and 180°, as illustrated in FIGS. 21A and 21B, the display apparatus 2 displays the operation guide 500 in the same manner when the display directions associated with the pen IDs are 90 degrees and 270 degrees.

FIG. 21A illustrates the converted character string 101 and the operation guide 500 displayed in the 90-degree display direction. FIG. 21B illustrates the converted character string 101 and the operation guide 500 displayed in the 270-degree display direction. FIGS. 21A and 21B illustrate cases where the user selects the converted character string 101 with the pen 2500 associated with the 90-degree display direction and 270-degree display direction, respectively, from the state of FIG. 19B. The character string candidates 539 in FIGS. 21A and 21B are in English, but can be displayed in another language associated with the pen 2500, such as Chinese or French.

As described above, the display apparatus 2 rotates the converted character string 101 and the operation guide 500 in addition to the conversion of the character string, thereby facilitating communication.

As described above, the display apparatus 2 according to the present embodiment enables the user to select, from a plurality of candidates, a character string to be converted into the target language, thereby facilitating smooth communication. Further, in response to the user's selecting the converted character string 101, the display apparatus again displays the plurality of candidates of the character string to be converted, even after one of the candidates has been converted into the target language. Therefore, the display apparatus 2 receives the selection of another one from the character string candidates and converts the selected character string into the target language, without user's repeatedly inputting the handwriting. Further, the display apparatus 2 converts the selected character string into the target language set for the pen.

### Embodiment 2

Descriptions are given of examples of a configuration of a display system according to embodiments.

A description is given below of an example of the configuration of the display system according to an embodiment.

Although the display apparatus 2 described above has a large touch panel, the display apparatus 2 is not limited thereto.

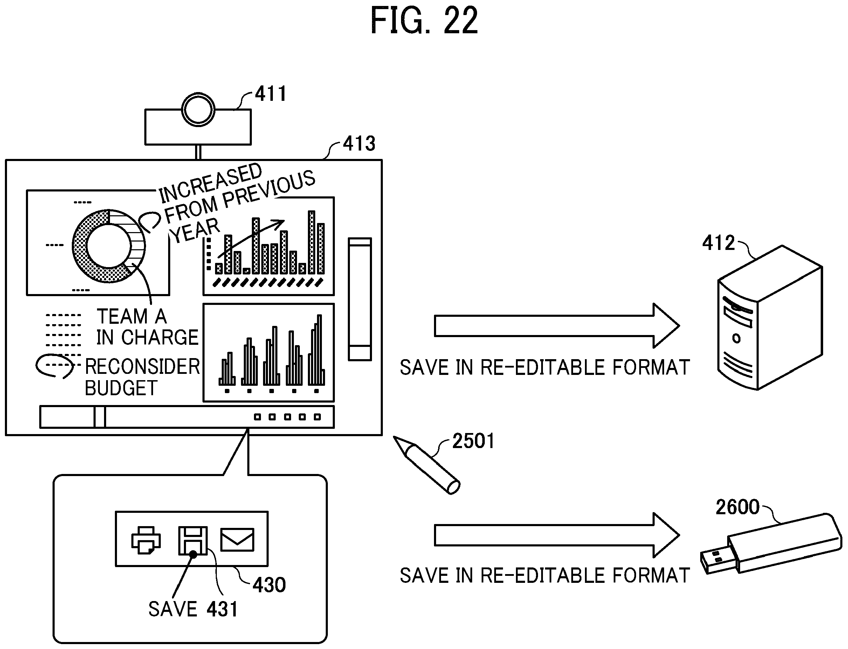

FIG. 22 is a diagram illustrating an example of the configuration of the display system according Embodiment 2. The display system includes a projector 411, a standard whiteboard 413, and a server 412, which are communicable via a network. In FIG. 22, the projector 411 is installed on the upper face of the whiteboard 413. The projector 411 mainly operates as the display apparatus 2 described above. The projector 411 is a general-purpose projector, but installed with software that causes the projector 411 to function as the functional units illustrated in FIG. 4. The "standard whiteboard" (the whiteboard 413) is not a flat panel display integral with a touch panel, but is a whiteboard to which a user directly handwrites or hand-draws information with a marker. Note that the whiteboard may be a blackboard, and may be simply a plane having an area large enough to project an image.

The projector 411 employs an ultra short-throw optical system and projects an image (video) with reduced distortion from a distance of about 10 cm to the whiteboard 413. This video may be transmitted from a PC connected wirelessly or by wire, or may be stored in the projector 411.

The user performs handwriting on the whiteboard 413 using a dedicated electronic pen 2501. The electronic pen 2501 includes a light-emitting element, for example, at a tip thereof. When a user presses the electronic pen 2501 against the whiteboard 413 for handwriting, a switch is turned on, and the light-emitting element emits light. The wavelength of the light from the light-emitting element is near-infrared or infrared, which is invisible to the user's eyes. The projector 411 includes a camera. The projector 411 captures, with the camera, an image of the light-emitting element, analyzes the image, and determines the direction of the electronic pen 2501. Further, the electronic pen 2501 emits a sound wave in addition to the light, and the projector 411 calculates a distance based on an arrival time of the sound wave. The projector 411 determines the position of the electronic pen 2501 based on the direction and the distance. Thus, the contact position detection unit 21 is implemented by the camera and a sound wave receiver.

A handwritten object is drawn (projected) at the position of the electronic pen 2501.

The projector 411 projects a menu 430. When the user presses a button of the menu 430 with the electronic pen 2501, the projector 411 determines the pressed button based on the position of the electronic pen 2501 and the ON signal of the switch. For example, when a save button 431 is pressed, data of handwriting by the user is saved as hand drafted data (including coordinate point sequence) in the projector 411. The projector 411 stores the hand drafted data in the predetermined server 412, a USB memory 2600, or the like. The hand drafted data is stored for each page. The hand drafted data is stored not as image data but as coordinates, and the user can re-edit the content. Note that, in the present embodiment, an operation command can be called by handwriting, and the menu 430 does not have to be displayed.

### Embodiment 3

A description is given below of another example of the configuration of the display system.

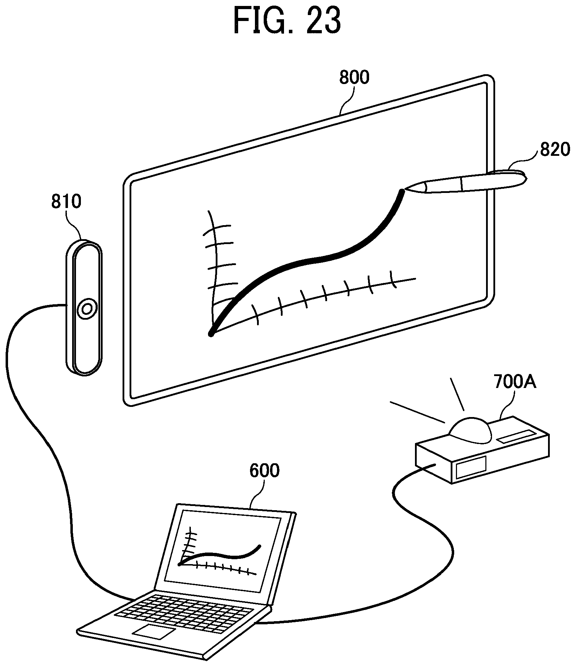

FIG. 23 is a diagram illustrating another example of the configuration of the display system. In the example illustrated FIG. 23, the display system includes a terminal 600 (information processing terminal such as a PC), an image projector 700A, and a pen motion detector 810.

The terminal 600 is wired to the image projector 700A and the pen motion detector 810. The image projector 700A projects an image onto a screen 800 according to data input from the terminal 600.

The pen motion detector 810 communicates with an electronic pen 820 to detect a motion of the electronic pen 820 in the vicinity of the screen 800. More specifically, the pen motion detector 810 detects coordinate information indicating the position pointed by the electronic pen 820 on the screen 800 and transmits the coordinate information to the terminal 600. The detection method may be similar to that of FIG 22. Thus, the contact position detection unit 21 is implemented by the pen motion detector 810.

Based on the coordinates received from the pen motion detector 810, the terminal 600 generates image data based on hand drafted input by the electronic pen 820 and causes the image projector 700A to project, on the screen 800, an image based on the hand drafted data.

The terminal 600 generates data of a superimposed image in which an image based on hand drafted input by the electronic pen 820 is superimposed on the background image projected by the image projector 700A.

### Embodiment 4

A description is given below of another example of the configuration of the display system.

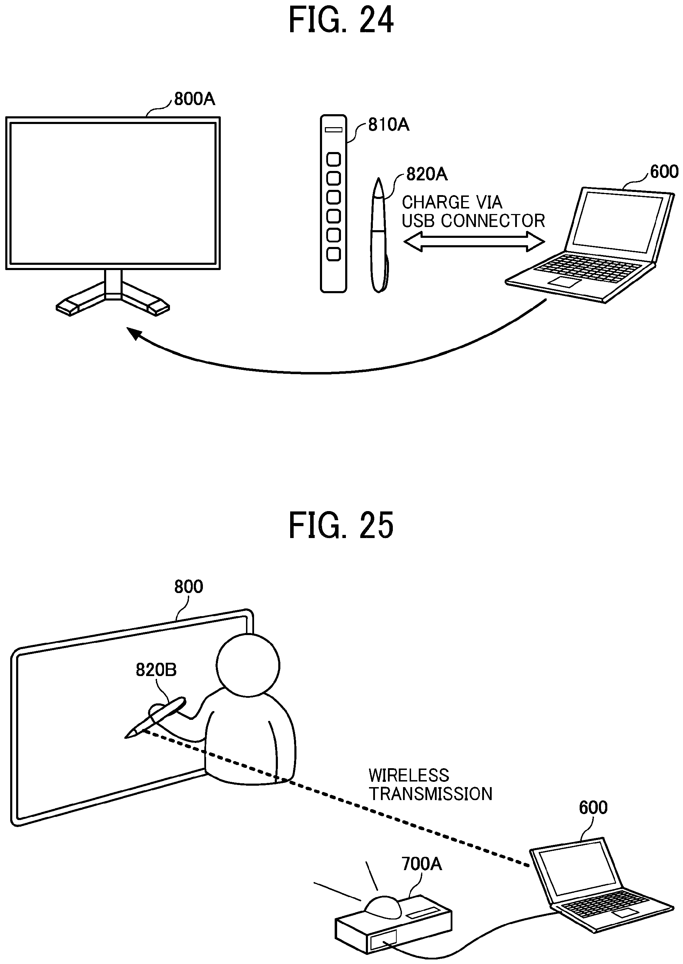

FIG. 24 is a diagram illustrating an example of the configuration of the display system according to Embodiment 4. In the example illustrated in FIG. 24, the display system includes the terminal 600, a display 800A, and a pen motion detector 810A.

The pen motion detector 810 is disposed in the vicinity of the display 800A. The pen motion detector 810 detects coordinate information indicating a position pointed by an electronic pen 820A on the display 800A and transmits the coordinate information to the terminal 600. The coordinate information may be detected in a method similar to that of FIG. 22. In the example illustrated FIG. 24, the electronic pen 820A may be charged from the terminal 600 via a USB connector.

Based on the coordinate information received from the pen motion detector 810, the terminal 600 generates image data of hand drafted data input by the electronic pen 820A and displays an image based on the hand drafted data on the display 800A.

### Embodiment 5

A description is given below of another example of the configuration of the display system.

FIG. 25 is a diagram illustrating an example of the configuration of the display system according to Embodiment 5. In the example illustrated FIG. 25, the display system includes the terminal 600 and the image projector 700A.

The terminal 600 communicates with an electronic pen 820B through by wireless communication such as BLUETOOTH, to receive coordinate information indicating a position pointed by the electronic pen 820B on the screen 800. The electronic pen 820B may read minute position information on the screen 800, or receive the coordinate information from the screen 800.

Based on the received coordinate information, the terminal 600 generates image data of hand drafted data input by the electronic pen 820B, and controls the image projector 700A to project an image based on the hand drafted data.

The terminal 600 generates data of a superimposed image in which an image based on hand drafted data input by the electronic pen 820B is superimposed on the background image projected by the image projector 700A.

The embodiments described above are applied to various system configurations. Now, descriptions are given of other application of the embodiments described above.

The present disclosure is not limited to the details of the embodiments described above, and various modifications and improvements are possible.

The display apparatus 2 stores the character string as one or more character codes and stores the hand drafted data as coordinate point data. The data can be saved in various types of storage media or in a memory on a network, to be downloaded from the display apparatus 2 to be reused later. The display apparatus 2 to reuse the data may be any display apparatus and may be a general information processing device. This allows a user to continue a conference or the like by reproducing the hand drafted content on different display apparatuses 2.

In the description above, an electronic whiteboard is described as an example of the display apparatus 2, but this is not limiting. A device having a substantially the same functions as the electronic whiteboard may be referred to as an electronic information board, an interactive board, or the like. The present disclosure is applicable to any information processing apparatus with a touch panel. Examples of the information processing apparatus with a touch panel include, but not limited to, a projector (PJ), a data output device such as a digital signage, a head up display (HUD), an industrial machine, an imaging device such as a digital camera, a sound collecting device, a medical device, a network home appliance, a laptop computer, a mobile phone, a smartphone, a tablet terminal, a game console, a personal digital assistant (PDA), a wearable PC, and a desktop PC.

In this case, the display apparatus 2 may detect the coordinates of the tip of the pen using ultrasonic waves, although the coordinates of the tip of the pen are detected using the touch panel in the above-described embodiment. For example, the pen emits an ultrasonic wave in addition to the light, and the display apparatus 2 calculates a distance based on an arrival time of the sound wave. The display apparatus 2 determines the position of the pen based on the direction and the distance. The projector draws (projects) the trajectory of the pen based on stroke data.

In the block diagram such as FIG. 4, functional units are divided into blocks in accordance with main functions of the display apparatus 2, in order to facilitate understanding the operation by the display apparatus 2. Each processing unit or each specific name of the processing unit is not to limit a scope of the present disclosure. The processing implemented by the display apparatus 2 may be divided into a larger number of processing units depending on the content of the processing. In addition, a single processing unit can be further divided into a plurality of processing units.

A part of the processing performed by the display apparatus 2 may be performed by a server connected to the display apparatus 2 via a network. A part or all of the target language storage area 41, the operation command definition data storage area 42, the input data storage area 43, and the dictionaries 44 may be stored in one or more servers.

For example, the language conversion unit 30 may reside on the server, which may be implemented by one or more information processing apparatuses.

Specifically, the server implements, in one example, the functional units in FIG. 4 other than the contact position detection unit 21, the drawing data generation unit 22, the display control unit 24, the network communication unit 26, and the operation receiving unit 27.

In such case, at the display apparatus 2, the contact position detection unit 21 detects coordinates of the position touched by the pen 2500. The drawing data generation unit 22 generates stroke data based on the detected coordinates. The network communication unit 26 transmits the stroke data to the server. At the server, the pen communication unit 31 receives the pen ID from the pen 2500, and the character recognition unit 23 performs character recognition processing on the stroke data received, to convert the stroke data into one or more character codes of the display language (recognition language) associated with the received pen ID. The language conversion unit 30 converts a selected character string (character codes) into a character string of the target language associated with the pen ID of the pen 2500. The server then transmits the character string of the target language to the display apparatus 2. The display control unit 24 displays, on the display, the character string of the target language.

The drawing data generation unit 22 may be provided at the server, if the server is capable of processing coordinate data.

Further, the functions of the character recognition unit 23 and the language conversion unit 30 may be distributed over a plurality of apparatuses. For example, character recognition processing on the stroke data, to convert the stroke data into character codes of the recognition language associated with the received pen ID may be performed at the display apparatus 2, while converting (translating) from the recognition language to the target language may be performed at the server.

Each of the functions of the described embodiments may be implemented by one or more processing circuits or circuitry. Here, the "processing circuit or circuitry" in the present specification includes a programmed processor to execute each function by software, such as a processor implemented by an electronic circuit, and devices, such as an application specific integrated circuit (ASIC), a digital signal processors (DSP), a field programmable gate array (FPGA), and conventional circuit modules designed to perform the recited functions.

The contact position detection unit 21 is an example of a receiving unit. The storing unit 40 is an example of a memory. The character recognition unit 23 is an example of a character recognition unit. The display control unit 24 is an example of a display control unit. The language conversion unit 30 is an example of a conversion unit.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

The present disclosure provides significant improvements in computer capabilities and functionalities. These improvements allow a user to utilize a computer which provides for more efficient and robust interaction with a display. Moreover, the present disclosure provides for a better user experience through the use of a more efficient, powerful and robust user interface. Such a user interface provides for a better interaction between a human and a machine.

## Claims

1. A display system comprising:
a receiving unit (21) configured to receive hand drafted data input by an electronic pen;
a recognition unit (23) configured to convert the hand drafted data into a plurality of character string candidates in a recognition language;
a storing unit (40) configured to store, in a memory, association information associating a target language with identification information of the electronic pen, the target language different from the recognition language;
a display control unit (24) configured to display, on a screen, the plurality of character string candidates; and
a conversion unit (30) configured to convert one of the plurality of character string candidates selected by the electronic pen into the target language associated with the identification information of the electronic pen,
wherein the display control unit (24) is configured to:
display a converted character string converted into the target language; and
in response to selection of the converted character string, display a plurality of character string candidates in the recognition language corresponding to the converted character string,
wherein the storing unit (40) is configured to store, in the memory, the recognition language and the target language in association with the identification information of the electronic pen, and the plurality of character string candidates in the recognition language,
wherein the recognition unit (23) is configured to convert the hand drafted data in the recognition language associated with the identification information of the electronic pen having been used to input the hand drafted data, and
wherein, in response to receiving selection of the converted character string by the electronic pen, the display control unit (24) is configured to display again the plurality of character string candidates in the recognition language associated with the identification information of the electronic pen having been used to select the converted character string.

2. The display system according to claim 1,
wherein, in response to selection of another one of the plurality of character string candidates by the electronic pen, the display control unit (24) is configured to display another converted character string converted, from the another one of the plurality of character string candidates, into the target language associated with the identification information of the electronic pen having been used to select the character string candidate.

3. The display system according to any one of claims 1 to 2,
wherein the storing unit (40) is configured to store, in the memory, different recognition languages respectively associated with identification information of a first electronic pen and identification information of a second electronic pen, and
wherein the display control unit (24) is configured to display the plurality of character string candidates in the recognition language associated with the identification information of the first electronic pen in a first case where the converted character string is selected by the first electronic pen, and to display the plurality of character string candidates in the recognition language associated with the identification information of the second electronic pen in a second case where the converted character string is selected by the second electronic pen.

4. The display system according to any one of claims 1 to 3,
wherein the storing unit (40) is configured to store, in the memory, different target languages respectively associated with identification information of a first electronic pen and identification information of a third electronic pen, and
wherein the display control unit (24) is configured to display the converted character string in the target language associated with the identification information of the first electronic pen in a first case where the character string candidate is selected by the first electronic pen, and to display the converted character string in the target language associated with the identification information of the third electronic pen in a second case where the character string candidate is selected by the third electronic pen.

5. The display system according to any one of claims 1 to 4,
wherein the storing unit (40) is further configured to store a display direction associated with the identification information of the electronic pen, and
wherein the display control unit (24) is configured to display the converted character string in the display direction associated with identification information of another electronic pen, the another electronic pen being associated with a recognition language that is the same as the target language associated with the identification information of the electronic pen having been used to select the character string candidate or the converted character string.

6. The display system according to claim 5,
wherein, in response to selection, by the electronic pen, of the converted character string displayed in the display direction, the display control unit (24) is configured to display a plurality of character string candidates in the recognition language associated with the identification information of the electronic pen having been used to select the converted character string and in the display direction associated with the identification information of the electronic pen having been used to select the converted character string.

7. The display system according to any one of claims 1 to 5,
wherein the receiving unit (21) and the display control unit (24) are implemented by a display apparatus (2), and the recognition unit (23), the conversion unit (30), and the storing unit (40) are implemented by one or more servers.

8. A display method comprising:
receiving (S 1) hand drafted data input by an electronic pen;
converting (S2) the hand drafted data into a plurality of character string candidates in a recognition language;
displaying (S3), on a screen, the plurality of character string candidates in the recognition language;
displaying (S5) a converted character string converted from one of the plurality of character string candidates selected by the electronic pen, the converted character string being converted into a target language associated with identification information of the electronic pen;
displaying (S7) a plurality of character string candidates in the recognition language corresponding to the converted character string in response to selection of the converted character string,
storing the recognition language and the target language in association with the identification information of the electronic pen, and the plurality of character string candidates in the recognition language in a memory;
converting the hand drafted data in the recognition language associated with the identification information of the electronic pen having been used to input the hand drafted data; and
in response to receiving selection of the converted character string by the electronic pen, displaying again the plurality of character string candidates in the recognition language associated with the identification information of the electronic pen having been used to select the converted character string.

9. Carrier means carrying computer readable codes which, when executed by a computer, cause the computer to carry out the method according to claim 8.

## Patentansprüche

1. Ein Anzeigesystem, das Folgendes umfasst:
eine Empfangseinheit (21), die dazu eingerichtet ist, handgezeichnete Daten zu empfangen, die mit einem elektronischen Stift eingegeben werden;
eine Erkennungseinheit (23), die dazu eingerichtet ist, die handgezeichneten Daten in eine Vielzahl von Zeichenkettenkandidaten in einer Erkennungssprache umzuwandeln;
eine Speichereinheit (40), die dazu eingerichtet ist, in einem Speicher Zuordnungsinformationen zu speichern, die eine Zielsprache mit Identifikationsinformationen des elektronischen Stifts verbinden, wobei sich die Zielsprache von der Erkennungssprache unterscheidet;
eine Anzeigesteuereinheit (24), die dazu eingerichtet ist, auf einem Bildschirm die Vielzahl von Zeichenkettenkandidaten anzuzeigen; und
eine Konvertierungseinheit (30), die dazu eingerichtet ist, einen aus der Vielzahl von Zeichenkettenkandidaten, der von dem elektronischen Stift ausgewählt wird, in die Zielsprache zu konvertieren, die mit der Identifikationsinformation des elektronischen Stifts verbunden ist,
wobei die Anzeigesteuereinheit (24) dazu eingerichtet ist:
eine umgewandelte Zeichenkette anzuzeigen, die in die Zielsprache umgewandelt wurde; und
als Reaktion auf die Auswahl der umgewandelten Zeichenkette eine Vielzahl von Zeichenkettenkandidaten in der Erkennungssprache entsprechend der umgewandelten Zeichenkette anzuzeigen,
wobei die Speichereinheit (40) dazu eingerichtet ist, in dem Speicher die Erkennungssprache und die Zielsprache in Verbindung mit der Identifikationsinformation des elektronischen Stiftes und der Vielzahl von Zeichenkettenkandidaten in der Erkennungssprache zu speichern,
wobei die Erkennungseinheit (23) dazu eingerichtet ist, die handschriftlichen Daten in die Erkennungssprache zu konvertieren, die mit der Identifikationsinformation des elektronischen Stifts verbunden ist, der zur Eingabe der handschriftlichen Daten verwendet wurde, und
wobei die Anzeigesteuereinheit (24) dazu eingerichtet ist, als Reaktion auf den Empfang der Auswahl der umgewandelten Zeichenkette durch den elektronischen Stift die Vielzahl von Zeichenkettenkandidaten in der Erkennungssprache wieder anzuzeigen, die mit der Identifikationsinformation des elektronischen Stifts verbunden ist, der zur Auswahl der umgewandelten Zeichenkette verwendet wurde.

2. Das Anzeigesystem nach Anspruch 1,
wobei die Anzeigesteuereinheit (24) dazu eingerichtet ist, als Reaktion auf die Auswahl eines anderen aus der Vielzahl von Zeichenkettenkandidaten durch den elektronischen Stift eine andere umgewandelte Zeichenkette anzuzeigen, die aus dem anderen aus der Vielzahl von Zeichenkettenkandidaten in die Zielsprache umgewandelt wurde, die mit der Identifikationsinformation des elektronischen Stifts verbunden ist, der zur Auswahl des Zeichenkettenkandidaten verwendet wurde.

3. Das Anzeigesystem nach einem der Ansprüche 1 bis 2,
wobei die Speichereinheit (40) dazu eingerichtet ist, in dem Speicher unterschiedliche Erkennungssprachen zu speichern, die jeweils mit der Identifikationsinformation eines ersten elektronischen Stifts und der Identifikationsinformation eines zweiten elektronischen Stifts verbunden sind, und
wobei die Anzeigesteuereinheit (24) dazu eingerichtet ist, die Vielzahl von Zeichenkettenkandidaten in der Erkennungssprache, die mit der Identifikationsinformation des ersten elektronischen Stifts verbunden ist, in einem ersten Fall anzuzeigen, in dem die umgewandelte Zeichenkette durch den ersten elektronischen Stift ausgewählt wird, und die Vielzahl von Zeichenkettenkandidaten in der Erkennungssprache, die mit der Identifikationsinformation des zweiten elektronischen Stifts verbunden ist, in einem zweiten Fall anzuzeigen, in dem die umgewandelte Zeichenkette durch den zweiten elektronischen Stift ausgewählt wird.

4. Das Anzeigesystem nach einem der Ansprüche 1 bis 3,
wobei die Speichereinheit (40) dazu eingerichtet ist, in dem Speicher unterschiedliche Zielsprachen zu speichern, die jeweils mit der Identifikationsinformation eines ersten elektronischen Stifts und der Identifikationsinformation eines dritten elektronischen Stifts verbunden sind, und
wobei die Anzeigesteuereinheit (24) dazu eingerichtet ist, die umgewandelte Zeichenkette in der Zielsprache, die mit der Identifikationsinformation des ersten elektronischen Stiftes verbunden ist, in einem ersten Fall anzuzeigen, in dem der Zeichenkettenkandidat durch den ersten elektronischen Stift ausgewählt wird, und die umgewandelte Zeichenkette in der Zielsprache, die mit der Identifikationsinformation des dritten elektronischen Stiftes verbunden ist, in einem zweiten Fall anzuzeigen, in dem der Zeichenkettenkandidat durch den dritten elektronischen Stift ausgewählt wird.

5. Das Anzeigesystem nach einem der Ansprüche 1 bis 4,
wobei die Speichereinheit (40) ferner dazu eingerichtet ist, eine Anzeigerichtung zu speichern, die mit der Identifikationsinformation des elektronischen Stifts verbunden ist, und
wobei die Anzeigesteuereinheit (24) dazu eingerichtet ist, die umgewandelte Zeichenkette in der Anzeigerichtung anzuzeigen, die mit der Identifikationsinformation eines anderen elektronischen Stifts verbunden ist, wobei der andere elektronische Stift mit einer Erkennungssprache verbunden ist, die dieselbe ist wie die Zielsprache, die mit der Identifikationsinformation des elektronischen Stifts verbunden ist, der verwendet wurde, um den Zeichenkettenkandidaten oder die umgewandelte Zeichenkette auszuwählen.

6. Das Anzeigesystem nach Anspruch 5,
wobei die Anzeigesteuereinheit (24) als Reaktion auf die Auswahl der in der Anzeigerichtung angezeigten umgewandelten Zeichenkette durch den elektronischen Stift dazu eingerichtet ist, eine Vielzahl von Zeichenkettenkandidaten in der Erkennungssprache anzuzeigen, die der Identifikationsinformation des elektronischen Stifts zugeordnet ist, der zur Auswahl der umgewandelten Zeichenkette verwendet wurde, und in der Anzeigerichtung, die der Identifikationsinformation des elektronischen Stifts zugeordnet ist, der zur Auswahl der umgewandelten Zeichenkette verwendet wurden.

7. Das Anzeigesystem nach einem der Ansprüche 1 bis 5,
wobei die Empfangseinheit (21) und die Anzeigesteuereinheit (24) durch ein Anzeigegerät (2) implementiert sind und die Erkennungseinheit (23), die Umwandlungseinheit (30) und die Speichereinheit (40) durch einen oder mehrere Server implementiert sind.

8. Ein Anzeigeverfahren, das Folgendes umfasst:
das Empfangen (S1) von handgezeichneten Daten, die mit einem elektronischen Stift eingegeben werden;
das Konvertieren (S2) der handgezeichneten Daten in eine Vielzahl von Zeichenkettenkandidaten in einer Erkennungssprache;
das Anzeigen (S3) der Vielzahl von Zeichenkettenkandidaten in der Erkennungssprache auf einem Bildschirm;
das Anzeigen (S5) einer umgewandelten Zeichenkette, die aus einem der Vielzahl von Zeichenkettenkandidaten umgewandelt wurde, der von dem elektronischen Stift ausgewählt wurde, wobei die umgewandelte Zeichenkette in eine Zielsprache umgewandelt wird, die mit der Identifikationsinformation des elektronischen Stifts assoziiert ist;
das Anzeigen (S7) einer Vielzahl von Zeichenkettenkandidaten in der Erkennungssprache, die der umgewandelten Zeichenkette entsprechen, in Reaktion auf die Auswahl der umgewandelten Zeichenkette,
das Speichern der Erkennungssprache und der Zielsprache in Verbindung mit den Identifikationsinformationen des elektronischen Stifts und der Vielzahl von Zeichenkettenkandidaten in der Erkennungssprache in einem Speicher;
das Konvertieren der handschriftlichen Daten in die Erkennungssprache, die mit der Identifikationsinformation des elektronischen Stifts verbunden ist, der zur Eingabe der handschriftlichen Daten verwendet wurde; und
als Reaktion auf den Empfang der Auswahl der umgewandelten Zeichenkette durch den elektronischen Stift, das erneute Anzeigen der Vielzahl von Zeichenkettenkandidaten in der Erkennungssprache, die mit der Identifikationsinformation des elektronischen Stifts verbunden ist, der verwendet wurde, um die umgewandelte Zeichenkette auszuwählen.

9. Ein Trägermittel, das einen computerlesbaren Codes trägt, der, wenn er von einem Computer ausgeführt wird, den Computer dazu veranlassen, das Verfahren nach Anspruch 8 auszuführen.

## Revendications

1. Système d'affichage comprenant :
une unité de réception (21) conçue pour recevoir des données manuscrites saisies par un stylo électronique ;
une unité de reconnaissance (23) conçue pour convertir les données manuscrites en une pluralité de chaînes de caractères candidates dans une langue de reconnaissance ;
une unité de stockage (40) conçue pour stocker, dans une mémoire, des informations d'association associant une langue cible aux informations d'identification du stylo électronique, la langue cible étant différente de la langue de reconnaissance ;
une unité de commande d'affichage (24) conçue pour afficher, sur un écran, la pluralité de chaînes de caractères candidates ; et
une unité de conversion (30) conçue pour convertir l'une des chaînes de caractères candidates, sélectionnée par le stylo électronique, dans la langue cible associée aux informations d'identification du stylo électronique ;
dans lequel l'unité de commande d'affichage (24) est conçue pour :
afficher une chaîne de caractères convertie qui a été convertie dans la langue cible ; et
en réponse à la sélection de la chaîne de caractères convertie, afficher une pluralité de chaînes de caractères candidates dans la langue de reconnaissance correspondant à la chaîne de caractères convertie,
dans lequel l'unité de stockage (40) est conçue pour stocker, dans la mémoire, la langue de reconnaissance et la langue cible en association avec les informations d'identification du stylo électronique, et la pluralité de chaînes de caractères candidates dans la langue de reconnaissance,
dans lequel l'unité de reconnaissance (23) est conçue pour convertir les données manuscrites dans la langue de reconnaissance associée aux informations d'identification du stylo électronique ayant servi à saisir les données manuscrites, et
dans lequel, en réponse à la réception de la sélection de la chaîne de caractères convertie par le stylo électronique, l'unité de commande d'affichage (24) est conçue pour réafficher la pluralité de chaînes de caractères candidates dans la langue de reconnaissance associée aux informations d'identification du stylo électronique ayant servi à sélectionner la chaîne de caractères convertie.

2. Système d'affichage selon la revendication 1,
dans lequel, en réponse à la sélection d'une autre des chaînes de caractères candidates par le stylo électronique, l'unité de commande d'affichage (24) est conçue pour afficher une autre chaîne de caractères convertie, à partir de ladite autre des chaînes de caractères candidates, dans la langue cible associée aux informations d'identification du stylo électronique ayant servi à sélectionner la chaîne de caractères candidate.

3. Système d'affichage selon l'une quelconque des revendications 1 et 2,
dans lequel l'unité de stockage (40) est conçue pour stocker, dans la mémoire, différentes langues de reconnaissance associées respectivement aux informations d'identification d'un premier stylo électronique et aux informations d'identification d'un deuxième stylo électronique, et
dans lequel l'unité de commande d'affichage (24) est conçue pour afficher la pluralité de chaînes de caractères candidates dans la langue de reconnaissance associée aux informations d'identification du premier stylo électronique dans un premier cas où la chaîne de caractères convertie est sélectionnée par le premier stylo électronique, et pour afficher la pluralité de chaînes de caractères candidates dans la langue de reconnaissance associée aux informations d'identification du deuxième stylo électronique dans un deuxième cas où la chaîne de caractères convertie est sélectionnée par le deuxième stylo électronique.

4. Système d'affichage selon l'une quelconque des revendications 1 à 3,
dans lequel l'unité de stockage (40) est conçue pour stocker, dans la mémoire, différentes langues cibles associées respectivement aux informations d'identification d'un premier stylo électronique et aux informations d'identification d'un troisième stylo électronique, et
dans lequel l'unité de commande d'affichage (24) est conçue pour afficher la chaîne de caractères convertie dans la langue cible associée aux informations d'identification du premier stylo électronique dans un premier cas où la chaîne de caractères candidate est sélectionnée par le premier stylo électronique, et pour afficher la chaîne de caractères convertie dans la langue cible associée aux informations d'identification du troisième stylo électronique dans un deuxième cas où la chaîne de caractères candidate est sélectionnée par le troisième stylo électronique.

5. Système d'affichage selon l'une quelconque des revendications 1 à 4,
dans lequel l'unité de stockage (40) est en outre conçue pour stocker une direction d'affichage associée aux informations d'identification du stylo électronique, et
dans lequel l'unité de commande d'affichage (24) est conçue pour afficher la chaîne de caractères convertie dans la direction d'affichage associée aux informations d'identification d'un autre stylo électronique, ledit autre stylo électronique étant associé à une langue de reconnaissance qui est la même que la langue cible associée aux informations d'identification du stylo électronique ayant servi à sélectionner la chaîne de caractères candidate ou la chaîne de caractères convertie.

6. Système d'affichage selon la revendication 5,
dans lequel, en réponse à la sélection, par le stylo électronique, de la chaîne de caractères convertie affichée dans la direction d'affichage, l'unité de commande d'affichage (24) est conçue pour afficher une pluralité de chaînes de caractères candidates dans la langue de reconnaissance associée aux informations d'identification du stylo électronique ayant servi à sélectionner la chaîne de caractères convertie et dans la direction d'affichage associée aux informations d'identification du stylo électronique ayant servi à sélectionner la chaîne de caractères convertie.

7. Système d'affichage selon l'une quelconque des revendications 1 à 5,
dans lequel l'unité de réception (21) et l'unité de commande d'affichage (24) sont mises en oeuvre par un appareil d'affichage (2), et l'unité de reconnaissance (23), l'unité de conversion (30) et l'unité de stockage (40) sont mises en oeuvre par un ou plusieurs serveurs.

8. Procédé d'affichage comprenant :
la réception (S1) de données manuscrites saisies par un stylo électronique ;
la conversion (S2) des données manuscrites en une pluralité de chaînes de caractères candidates dans une langue de reconnaissance ;
l'affichage (S3), sur un écran, de la pluralité de chaînes de caractères candidates dans la langue de reconnaissance ;
l'affichage (S5) d'une chaîne de caractères convertie à partir d'une des chaînes de caractères candidates, sélectionnée par le stylo électronique, la chaîne de caractères convertie étant convertie dans une langue cible associée aux informations d'identification du stylo électronique ;
l'affichage (S7) d'une pluralité de chaînes de caractères candidates dans la langue de reconnaissance correspondant à la chaîne de caractères convertie, en réponse à la sélection de la chaîne de caractères convertie,
le stockage de la langue de reconnaissance et de la langue cible en association avec les informations d'identification du stylo électronique, et de la pluralité de chaînes de caractères candidates dans la langue de reconnaissance dans une mémoire ;
la conversion des données manuscrites dans la langue de reconnaissance associée aux informations d'identification du stylo électronique ayant servi à saisir les données manuscrites ; et
en réponse à la réception de la sélection de la chaîne de caractères convertie par le stylo électronique, le réaffichage de la pluralité de chaînes de caractères candidates dans la langue de reconnaissance associée aux informations d'identification du stylo électronique ayant servi à sélectionner la chaîne de caractères convertie.

9. Moyen de support porteur de codes lisibles par ordinateur qui, lorsqu'ils sont exécutés par un ordinateur, amènent l'ordinateur à mettre en oeuvre le procédé de la revendication 8.
